# EUROPEAN PATENT SPECIFICATION

(11) **EP 4 246 727 B1**
(45) Date of publication and mention of the grant of the patent: **28.10.2026**
(21) Application number: 21890646.9
(22) Date of filing: 05.07.2021
(51) Int. Cl.: H01Q 1/52, H01Q 1/22, H01Q 21/06, H01Q 3/24

(54) **ANTENNA-UNDER-DISPLAY MANAGEMENT METHOD AND APPARATUS**
VERFAHREN UND VORRICHTUNG ZUR VERWALTUNG EINER ANTENNE UNTER EINER ANZEIGE
PROCÉDÉ ET APPAREIL DE GESTION D'ANTENNE EN COURS D'AFFICHAGE

(30) Priority: 16.11.2020 CN 202011281057
(43) Date of publication of application: 20.09.2023
(73) Proprietor: Huawei Technologies Co., Ltd., Shenzhen, Guangdong 518129 (CN)
(72) Inventor: ZENG, Kun, Shenzhen, Guangdong 518129 (CN); WANG, Guangjian, Shenzhen, Guangdong 518129 (CN); TONG, Wen, Shenzhen, Guangdong 518129 (CN)
(74) Representative: Epping - Hermann - Fischer
(86) International application number: PCT/CN2021/104475
(87) International publication number: WO 2022/100115

(56) References cited:
- CN-A- 106 850 959
- CN-A- 108 337 025
- CN-A- 109 088 965
- CN-A- 111 448 769
- US-A1- 2020 136 234
- US-B2- 9 641 229

## Description

### TECHNICAL FIELD

This application relates to the field of communication technologies, and in particular, to an antenna-under-display management method and apparatus.

### BACKGROUND

With vigorous development of a consumer electronic market, electronic devices having a screen display function, such as smartphones, tablets, and smartwatches, are widely used in our daily lives. With popularization of mobile Internet applications (for example, short videos and online games), a higher requirement is imposed on a wireless communication capability (for example, antenna performance) that such electronic devices need to support. However, blocking by an object affects normal propagation of electromagnetic signals/optical signals and reduces radiation efficiency of an antenna. As a result, a signal-to-interference and-noise ratio (signal-to-interference-and-noise ratio, SINR) corresponding to a communication link is reduced. This further affects communication quality. Attenuation of the radiation efficiency of the antenna relates to a material of an obstacle. For example, when the obstacle is made of a metal material, the obstacle attenuates the electromagnetic signal more strongly, and when the obstacle is made of a non-transparent material, the obstacle attenuates the optical signal more strongly.

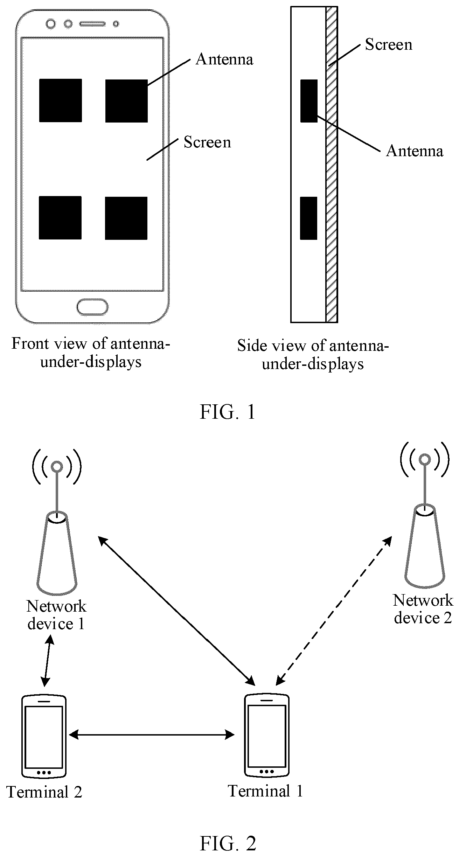

An electronic device having a screen display function generally supports a screen touch operation and a wireless communication function. An evolution trend of such electronic devices is that a screen of the electronic devices becomes larger and a screen-to-body ratio gets higher without increasing an overall size of the product or even in the case that the product is further miniaturized. Therefore, currently, an antenna-under-display (antenna-under-display) technology is to be used for optimization of antenna performance. An antenna-under-display may also be referred to as an antenna-on-display (antenna-on-display). FIG. 1 is a schematic diagram of an antenna-under-display. Radiation efficiency of the antenna is improved by installing the antenna under a screen and utilizing a technical feature that the screen is usually made of a non-metallic material, such as glass and resin, whose electromagnetic signal/optical signal absorption rate is lower than that of a metal shell. However, considering only blocking for an electromagnetic signal/optical signal by the electronic device can only partially improve the radiation efficiency of the antenna. From US 9,641,229 B2 methods and systems for reconfiguring over-indexed antenna arrays in mobile devices are provided where sensor input indicates an object blocking a first subset of reconfigurable antenna elements but not blocking a second subset. From US 2020/0136234 A1 electronic devices with a display and a phased array antenna are known.

### SUMMARY

The invention is set out in the appended set of claims. Examples of this application provide an antenna-under-display management method and apparatus, to further improve radiation efficiency of an antenna.

According to a first aspect, an antenna-under-display management method is provided. The method includes: obtaining antenna-under-display blocking information of a device, determining a first antenna set based on the antenna-under-display blocking information, and performing signal transmission by using the first antenna set. The first antenna set is a subset of a second antenna set, and the second antenna set is constituted by an unblocked antenna-under-display of the device. In other words, each antenna in the first antenna set is an unblocked antenna. This avoids reduction of radiation efficiency of the antenna-under-display that is caused by blocking a screen due to a user operation, an ambient environment, or the like, improves a signal to interference plus noise ratio of a communication link, reduces a quantity of invalid transmissions and repeated transmissions, reduces a transmit power and power consumption of the device, and improves quality of a communication service.

In a possible implementation, the obtaining antenna-under-display blocking information of a device includes: obtaining screen blocking information of the device, and determining the antenna-under-display blocking information based on the screen blocking information. In this possible implementation, determining whether an internal module of the device is blocked is converted to determining whether a surface module of the device is blocked, so that the antenna-under-display blocking information can be conveniently and accurately determined.

In a possible implementation, the obtaining screen blocking information of the device, and determining the antenna-under-display blocking information based on the screen blocking information includes: determining a blocked region on a screen of the device; and determining that an antenna-under-display in the blocked region on the screen of the device is a blocked antenna-under-display, or when an antenna-under-display is an antenna-under-display array, and a ratio of a quantity of antenna elements in the blocked region on the screen of the device to a quantity of antenna elements in an antenna array to which the antenna elements in the blocked region on the screen of the device belongs is greater than a first threshold, determining that the antenna-under-display in the blocked region on the screen of the device is a blocked antenna-under-display. In this possible implementation, a specific implementation problem in an application scenario in which some antennas or some antenna elements in an antenna group or an antenna array are blocked in technical solutions of this application can be effectively solved. In a possible implementation, the determining a blocked region on a screen of the device includes: determining the blocked region based on a touched region on the screen of the device. In this possible implementation, a cause-effect relationship between a user operation and blocking may be fully utilized to efficiently and quickly determine whether an antenna-under-display is blocked. In a possible implementation, the determining a blocked region on a screen of the device includes: obtaining capacitance change information of a region on the screen of the device; and determining the blocked region based on a region in which capacitance changes. In this possible implementation, a feature of the screen of the device may be fully utilized to conveniently and quickly determine which regions on the screen are blocked.

In a possible implementation, the determining a blocked region on a screen of the device includes: performing blocking detection on the screen of the device by using one or more sensors, to obtain a detection result; and determining the blocked region based on the detection result. In this possible implementation, blocking detection may be performed on a screen region by using an electromagnetic signal and/or an optical signal. This avoids secondary design of the screen, for example, adding of a capacitance layer.

In a possible implementation, a screen of the device includes a plurality of first regions, there is a correspondence between a first region and an antenna-under-display, and the obtaining antenna-under-display blocking information of a device includes: when a blocked proportion of a first region corresponding to a first antenna-under-display is greater than a second threshold, determining that the first antenna-under-display is blocked; and when the blocked proportion of the first region corresponding to the first antenna-under-display is less than or equal to the second threshold, determining that the first antenna-under-display is not blocked, where the first antenna-under-display is one of antennas-under-display of the device. In this possible implementation, region division is performed on the screen of the device. This can determine more efficiently which antennas-under-display are blocked. In a possible implementation, the determining a blocked region on a screen of the device includes: determining the blocked region on the screen of the device based on a position of an obstacle, in a first space, that blocks the screen of the device, where projection of a bottom surface of the first space on a horizontal plane is a screen surface of the device, and a height is a preset value. In this possible implementation, the obstacle does not need to touch the screen of the device. Therefore, it may be determined whether the screen is blocked by an obstacle that is untouched but suspended at a short distance, for example, a palm part or an arm part. This can determine more accurately which antennas-under-display are blocked.

In a possible implementation, the determining a blocked region on a screen of the device includes: performing blocking detection on a first space by using one or more sensors, where projection of a bottom surface of the first space on a horizontal plane is a screen surface of the device, and a height is a preset value; and determining the blocked region based on a region formed by projecting a position of an obstacle that blocks the screen of the device and that is in the first space onto the screen of the device. In this possible implementation, the obstacle does not need to touch the screen of the device. Therefore, it may be determined whether the screen is blocked by an obstacle that is untouched but suspended at a short distance, for example, a palm part or an arm part. This can determine more accurately which antennas-under-display are blocked.

In a possible implementation, a first space includes M * N subspaces, M is an integer greater than 1, N is an integer greater than 0, projection of a bottom surface of the first space on a horizontal plane is a screen surface of the device, a height is a preset value, the bottom surface of the first space includes M second regions, there is a correspondence between a second region and an antenna-under-display, a space that uses the second region as a bottom surface and whose height is the preset value includes N subspaces, and the obtaining antenna-under-display blocking information of a device includes: when a ratio of an area formed by projecting an obstacle that blocks a screen of the device and that is in a first subspace onto the screen to an area of a second region corresponding to a first antenna-under-display is greater than a third threshold, determining that the first antenna-under-display is blocked; and when the ratio of the area formed by projecting the obstacle that blocks the screen of the device and that is in the first subspace onto the screen to the area of the second region corresponding to the first antenna-under-display is less than or equal to the third threshold, determining that the first antenna-under-display is not blocked, where the first subspace is a subspace, closest to the screen of the device among subspaces occupied by the obstacle, in the N subspaces corresponding to the second region corresponding to the first antenna-under-display. The first antenna-under-display is one of antennas-under-display of the device, and the third threshold corresponds to the first subspace. In this possible implementation, subspace division is performed on the first space. This can determine more accurately and efficiently which antennas-under-display are blocked.

In a possible implementation, the preset value relates to one or more of the following: a size of the device, a size of the screen of the device, a transmit power of a communication module of the device, a receive power of the communication module of the device, a communication service type carried by a signal, a frequency for touching the screen for performing a service by the device in a communication process, and a detection capability of the device for the antenna-under-display blocking information. In this optional method, a value of the preset value may be reasonably determined, so that a result of determining whether the antenna-under-display is blocked is more reasonable and accurate.

In a possible implementation, the method further includes: periodically detecting the antenna-under-display blocking information of the device; and updating the second antenna set based on the detected antenna-under-display blocking information of the device. In this optional method, the second antenna set is updated. This can ensure that a selected first antenna set is determined based on a latest second antenna set, to ensure communication quality.

In a possible implementation, after the determining a first antenna set based on the antenna-under-display blocking information, the method further includes: determining whether link quality of a communication link of the device meets a requirement; and if the link quality does not meet the requirement, updating the first antenna set. In this optional method, the first antenna set may be updated based on the link quality of the communication link, so that a currently used first antenna set can meet the link quality requirement of the communication link.

According to a second aspect, an antenna-under-display management apparatus is provided. The apparatus includes a processing unit and a communication unit, where the processing unit is configured to obtain antenna-under-display blocking information of a device; the processing unit is further configured to determine a first antenna set based on the antenna-under-display blocking information, where the first antenna set is a subset of a second antenna set, and the second antenna set is constituted by an unblocked antenna-under-display of the device; and the communication unit is configured to perform signal transmission by using the first antenna set.

In a possible implementation, the processing unit is specifically configured to: obtain screen blocking information of the device, and determine the antenna-under-display blocking information based on the screen blocking information. In a possible implementation, the processing unit is specifically configured to: determine a blocked region on a screen of the device; and determine that an antenna-under-display in the blocked region on the screen of the device is a blocked antenna-under-display, or when antennas-under-display are an antenna-under-display array, and a ratio of a quantity of antenna elements in the blocked region on the screen of the device to a quantity of antenna elements in an antenna array to which the antenna elements in the blocked region on the screen of the device belongs is greater than a first threshold, determine that the antenna-under-display in the blocked region on the screen of the device is a blocked antenna-under-display.

In a possible implementation, the processing unit is specifically configured to: determine the blocked region based on a touched region on the screen of the device.

In a possible implementation, the processing unit is specifically configured to: obtain capacitance change information of a region on the screen of the device; and determine the blocked region based on a region in which capacitance changes.

In a possible implementation, the processing unit is specifically configured to: perform blocking detection on the screen of the device by using one or more sensors, to obtain a detection result; and determine the blocked region based on the detection result.

In a possible implementation, a screen of the device includes a plurality of first regions, there is a correspondence between a first region and an antenna-under-display, and the processing unit is specifically configured to: when a blocked proportion of a first region corresponding to a first antenna-under-display is greater than a second threshold, determine that the first antenna-under-display is blocked; and when the blocked proportion of the first region corresponding to the first antenna-under-display is less than or equal to the second threshold, determine that the first antenna-under-display is not blocked. The first antenna-under-display is one of antennas-under-display of the device.

In a possible implementation, the processing unit is specifically configured to: determine the blocked region on the screen of the device based on a position of an obstacle, in a first space, that blocks the screen of the device, where projection of a bottom surface of the first space on a horizontal plane is a screen surface of the device, and a height is a preset value.

In a possible implementation, the processing unit is specifically configured to: perform blocking detection on a first space by using one or more sensors, where projection of a bottom surface of the first space on a horizontal plane is a screen surface of the device, and a height is a preset value; and determine the blocked region based on a region formed by projecting a position of an obstacle that blocks the screen of the device and that is in the first space onto the screen of the device.

In a possible implementation, a first space includes M * N subspaces, M is an integer greater than 1, N is an integer greater than 0, projection of a bottom surface of the first space on a horizontal plane is a screen surface of the device, a height is a preset value, the bottom surface of the first space includes M second regions, where there is a correspondence between a second region and an antenna-under-display, a space that uses the second region as a bottom surface and whose height is the preset value includes N subspaces, and the processing unit is specifically configured to: when a ratio of an area formed by projecting an obstacle that blocks a screen of the device and that is in a first subspace onto the screen to an area of a second region corresponding to a first antenna-under-display is greater than a third threshold, determine that the first antenna-under-display is blocked; and when the ratio of the area formed by projecting the obstacle that blocks the screen of the device and that is in the first subspace onto the screen to the area of the second region corresponding to the first antenna-under-display is less than or equal to the third threshold, determine that the first antenna-under-display is not blocked. The first subspace is a subspace, closest to the screen of the device among subspaces occupied by the obstacle, in the N subspaces corresponding to the second region corresponding to the first antenna-under-display. The first antenna-under-display is one of antennas-under-display of the device, and the third threshold corresponds to the first subspace.

In a possible implementation, the preset value relates to one or more of the following: a size of the device, a size of the screen of the device, a transmit power of a communication module of the device, a receive power of the communication module of the device, a communication service type carried by a signal, a frequency for touching the screen for performing a service by the device in a communication process, and a detection capability of the device for the antenna-under-display blocking information.

In a possible implementation, the processing unit is further configured to: periodically detect the antenna-under-display blocking information of the device; and update the second antenna set based on the detected antenna-under-display blocking information of the device.

In a possible implementation, after determining the first antenna set based on the antenna-under-display blocking information, the processing unit is further configured to: determine whether link quality of a communication link of the device meets a requirement; and if the link quality does not meet the requirement, update the first antenna set.

According to a third aspect, an antenna-under-display management apparatus is provided. The apparatus includes a processor. The processor is connected to a memory, where the memory is configured to store computer-executable instructions, and the processor executes the computer-executable instructions stored in the memory, to implement the method provided in the first aspect. For example, the memory and the processor may be integrated together, or may be independent components. If the memory and the processor are independent components, the memory may be located in the antenna-under-display management apparatus, or may be located outside the antenna-under-display management apparatus.

In a possible implementation, the processor includes a logic circuit, and further includes an input interface and/or an output interface. For example, the output interface is configured to perform a sending action in a corresponding method, and the input interface is configured to perform a receiving action in the corresponding method.

In a possible implementation, the antenna-under-display management apparatus further includes a communication interface and a communication bus. The processor, the memory, and the communication interface are connected through the communication bus. The communication interface is configured to perform receiving and sending actions in the corresponding method. The communication interface may also be referred to as a transceiver. Optionally, the communication interface includes at least one of a transmitter and a receiver. In this case, the transmitter is configured to perform a sending action in the corresponding method, and the receiver is configured to perform a receiving action in the corresponding method.

In a possible implementation, the antenna-under-display management apparatus exists in a product form of a chip.

According to a fourth aspect, an antenna-under-display management apparatus is provided. The apparatus includes a processor and an interface. The processor is coupled to a memory through the interface. When the processor executes a computer program or instructions in the memory, any method provided in the first aspect is performed.

According to a fifth aspect, a computer-readable storage medium is provided. The computer-readable storage medium includes computer-executable instructions. When the computer-executable instructions are run on a computer, the computer is enabled to perform any method provided in the first aspect.

According to a sixth aspect, a computer program product is provided. The computer program product includes computer-executable instructions. When the computer-executable instructions are run on a computer, the computer is enabled to perform any method provided in the first aspect.

For technical effects brought by any implementation of the second aspect to the sixth aspect, refer to technical effects brought by a corresponding implementation of the first aspect. Details are not described herein again.

It should be noted that the solutions in the foregoing aspects may be combined on the premise that the solutions are not contradictory.

### BRIEF DESCRIPTION OF DRAWINGS

FIG. 1 is a schematic diagram of an antenna-under-display;
FIG. 2 is a schematic diagram of a communication scenario according to an example of this application;
FIG. 3 is a schematic diagram of blocking an antenna by a user operation according to an example of this application;
FIG. 4 is a flowchart of an antenna-under-display management method according to an example of this application;
FIG. 5 is a schematic diagram of a touched region and a blocked region according to an example of this application;
FIG. 6 is a schematic diagram of a structure of a device according to an example of this application;
FIG. 7 is a schematic diagram of positions of sensors on a device according to an example of this application;
FIG. 8 is a schematic diagram of signal receiving and sending of sensors according to an example of this application;
FIG. 9 is another schematic diagram of signal receiving and sending of sensors according to an example of this application;
FIG. 10 is a schematic diagram of a first space according to an example of this application;
FIG. 11 is a schematic diagram of a first plane according to an example of this application;
FIG. 12 is a schematic diagram of blocked antennas according to an example of this application;
FIG. 13 is another schematic diagram of blocked antennas according to an example of this application;
FIG. 14 is a schematic diagram of a correspondence between an antenna and a first region according to an example of this application;
FIG. 15 is a schematic diagram of subspaces included in a first space according to an example of this application;
FIG. 16 is a flowchart of another antenna-under-display management method according to an example of this application;
FIG. 17 is a flowchart of another antenna-under-display management method according to an example of this application;
FIG. 18 is a schematic diagram of a combination of different implementations according to an example of this application;
FIG. 19 is a schematic composition diagram of an antenna-under-display management apparatus according to an example of this application;
FIG. 20 is a schematic composition diagram of another antenna-under-display management apparatus according to an example of this application;
FIG. 21 is a schematic diagram of a hardware structure of an antenna-under-display management apparatus according to an example of this application; and
FIG. 22 is a schematic diagram of a hardware structure of another antenna-under-display management apparatus according to an example of this application.

### DESCRIPTION OF EXAMPLES

In descriptions of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In the descriptions of this application, unless otherwise stated, "at least one" means one or more, and "a plurality of" means two or more.

In addition, to clearly describe technical solutions in examples of this application, terms such as "first" and "second" are used in examples of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

The technical solutions in examples of this application may be applied to a 4th generation (4th generation, 4G) system, various systems evolved based on the 4G system, a 5th generation (5th generation, 5G) system, and various systems evolved based on the 5G system. The 4G system may also be referred to as an evolved packet system (evolved packet system, EPS). A core network of the 4G system may be referred to as an evolved packet core (evolved packet core, EPC), and an access network may be referred to as long term evolution (long term evolution, LTE). A core network of the 5G system may be referred to as a 5GC (5G core), and an access network may be referred to as new radio (new radio, NR). The technical solutions in examples of this application are applicable to a homogeneous network or a heterogeneous network, are applicable to a frequency-division duplex (frequency-division duplex, FDD) system or a time-division duplex (time-division duplex, TDD) system, and are applicable to a low-frequency communication scenario or a high-frequency communication scenario.

A communication system to which the technical solutions provided in this application are applicable may include at least one network device and at least one terminal. One or more terminals in the at least one terminal may communicate with one or more network devices in the at least one network device. For example, refer to FIG. 2. One terminal (for example, a terminal 1) may communicate with one network device (for example, a network device 1), or may communicate with a plurality of network devices (for example, the network device 1 and a network device 2). One terminal (for example, the terminal 1) may further communicate with another terminal (for example, a terminal 2).

The network device is an entity that is on a network side and that is configured to send a signal, receive a signal, or send a signal and receive a signal. The network device may be an apparatus that is deployed on a radio access network (radio access network, RAN) and that provides a wireless communication function for the terminal, for example, may be a transmission reception point (transmission reception point, TRP), a base station, or control nodes in various forms (for example, a network controller and a radio controller (for example, a radio controller in a cloud radio access network (cloud radio access network, CRAN) scenario)). Specifically, the network device may be a macro base station, a micro base station (also referred to as a small cell), a relay station, an access point (access point, AP), a satellite, or the like in various forms, or may be an antenna panel of a base station, a remote radio head (remote radio head, RRH), or the like. The control nodes may be connected to a plurality of base stations, and configure resources for a plurality of terminals within coverage of the plurality of base stations. In systems that use different radio access technologies, names of devices having functions of the base station may vary. For example, the device having a function of the base station may be referred to as an evolved NodeB (evolved NodeB, eNB or eNodeB) in an LTE system, or may be referred to as a next generation node base station (next generation node base station, gNB) in the 5G system or an NR system. A specific name of the base station is not limited in this application. The network device may alternatively be a network device in a future evolved public land mobile network (public land mobile network, PLMN) or the like.

The terminal is an entity that is on a user side and that is configured to receive a signal, send a signal, or receive a signal and send a signal, and is a wireless communication device that supports a screen touch operation. The terminal is configured to provide one or more of a voice service and a data connectivity service for a user. The terminal may also be referred to as user equipment (user equipment, UE), a terminal device, an access terminal, a subscriber unit, a subscriber station, a mobile station, a remote station, a remote terminal, a mobile device, a user terminal, a wireless communication device, a user agent, or a user apparatus. The terminal may be a smartphone, a tablet, a smartwatch, a mobile station (mobile station, MS), a subscriber unit (subscriber unit), a drone, an internet of things (internet of things, IoT) device, a station (station, ST) in a wireless local area network (wireless local area network, WLAN), a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device having a wireless communication function, a computing device or another processing device connected to a wireless modem, a vehicle-mounted device, or a wearable device (which may also be referred to as a wearable intelligent device). Alternatively, the terminal may be a terminal in a next-generation communication system, for example, a terminal in a 5G system or a terminal in a future evolved PLMN.

In addition to being affected by blocking by a screen, performance of an antenna-under-display of the terminal is further affected by blocking caused by a user operation, an ambient environment, and the like in an actual use process.

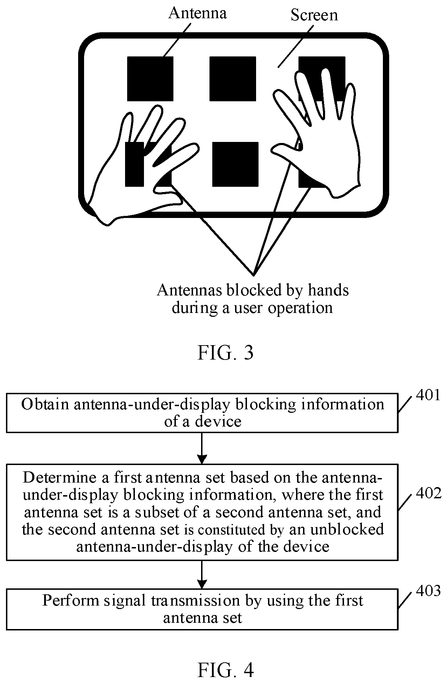

This also greatly affects the performance of an antenna-under-display. For example, refer to FIG. 3. A user performs an online game operation by using a tablet computer, and performs game interaction by constantly touching different positions on a screen. At a specific moment, some of antennas-under-display are blocked by palms. If blocking caused by the user operation is not considered, radiation efficiency of the antenna-under-display is weakened. In severe cases, an SINR does not meet a communication requirement. This may cause a communication failure. In addition, blocking by a same object has a greater effect on a high-frequency signal (for example, a millimeter wave signal or a submillimeter wave signal) than that on a centimeter wave signal, and optical communication is greatly affected by light brightness. Therefore, a high-frequency communication scenario (for example, a millimeter wave communication scenario, and a submillimeter wave communication scenario) and an optical communication scenario are more sensitive to blocking by an object. Therefore, this problem is particularly prominent in the high-frequency communication scenario and the optical communication scenario.

To resolve this problem, this application provides an antenna-under-display management method. Before signal transmission, an antenna set appropriate for signal transmission is determined based on a blocking status of an antenna-under-display, and the antenna set is used for signal transmission, to improve radiation efficiency of an antenna. Refer to FIG. 4. The method includes the following steps.

401. Obtain antenna-under-display blocking information of a device.

The device in this application may be a terminal, or may be another wireless communication device having a screen display function. The device (for example, the terminal) may communicate with a network device or another device (for example, another terminal). This example of this application may be performed by the device, or may be performed by another device that has a wired or wireless connection to the device. This is not limited in this application. In one case, an antenna in this application is an antenna element. In another case, an antenna in this application is an antenna array. One antenna array may include one or more antenna subarrays, and one antenna subarray may include one or more antenna elements. In other words, one antenna array may include a plurality of antenna elements. The antenna element may also be referred to as an antenna array element or a radiation element.

The antenna-under-display blocking information is used to determine whether an antenna-under-display of the device is blocked.

402. Determine a first antenna set based on the antenna-under-display blocking information, where the first antenna set is a subset of a second antenna set, and the second antenna set is constituted by an unblocked antenna-under-display of the device.

The first antenna set may be a proper subset of the second antenna set, or the first antenna set may be the same as the second antenna set.

403. Perform signal transmission by using the first antenna set.

Signal transmission includes signal sending and/or signal receiving.

During specific implementation of step 403, the first antenna set may be used to perform signal transmission in different transmission modes. For example, signal transmission may be performed in a transmission mode such as a single input single output (single input single output, SISO) transmission mode, a multiple input multiple output (Multiple Input Multiple Output, MIMO) transmission mode, or a beamforming (beamforming) transmission mode. The SISO transmission mode is a transmission mode in which signal transmission is performed by using one antenna at both a transmitting end and a receiving end. The MIMO transmission mode is a transmission mode in which signal transmission is performed by using a plurality of antennas at both the transmitting end and the receiving end. In the MIMO transmission mode, a plurality of spatial transmission channels are generated by using a plurality of transmit antennas and a plurality of receive antennas, so that signals may be transmitted in parallel in the plurality of spatial transmission channels, to better utilize spatial resources and improve spectral efficiency. In the beamforming transmission mode, a directional beam is generated by adjusting a weighting coefficient of an antenna. This can improve a beam gain and a signal transmission gain.

According to the method provided in this example of this application, one or more of unblocked antennas may be selected based on the antenna-under-display blocking information to perform signal transmission. This avoids reduction of radiation efficiency of the antenna-under-display that is caused by blocking a screen due to a user operation, an ambient environment, or the like, improves a signal to interference plus noise ratio of a communication link, reduces a quantity of invalid transmissions and repeated transmissions, reduces a transmit power and power consumption of the device, and improves quality of a communication service.

Optionally, during specific implementation, step 401 includes: 401-1. Obtain screen blocking information of the device, and determine the antenna-under-display blocking information based on the screen blocking information.

During specific implementation, step 401-1 may include the following steps:
(11) Determine a blocked region on a screen of the device.
(12) Determine that an antenna-under-display in the blocked region on the screen of the device is a blocked antenna-under-display, or when an antenna-under-display is an antenna-under-display array, and a ratio of a quantity of antenna elements in the blocked region on the screen of the device to a quantity of antenna elements in an antenna array to which the antenna elements in the blocked region on the screen of the device belongs is greater than a first threshold, determine that the antenna-under-display in the blocked region on the screen of the device is a blocked antenna-under-display.

Step (11) may be implemented in the following manner 1, manner 2, or manner 3.

Manner 1: Determine the blocked region based on a touched region on the screen of the device.

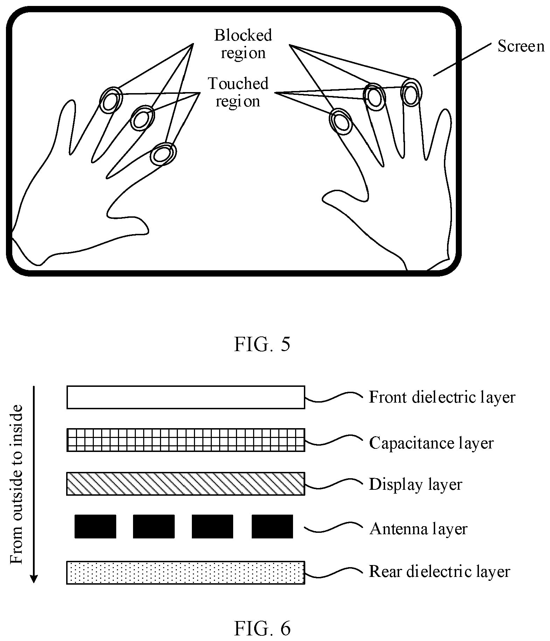

Manner 1 is a contact (that is, contact between an obstacle and a screen is required) manner of obtaining the blocked region on the screen of the device. During specific implementation of Manner 1, it may be determined that the touched region on the screen of the device is the blocked region, or it may be determined that a region including the touched region on the screen of the device is the touched region. For example, considering that a finger pulp of a person has a specific radian, when the finger pulp touches the screen of the device, another part (for example, a fingernail) of a finger is also close to the screen, and blocks an antenna-under-display. Therefore, a region obtained by extending a part of region outwards based on the touched region on the screen of the device may be used as the blocked region. For example, refer to FIG. 5. An edge of a touched region on a screen of a device may be extended outwards by a specific width, for example, by 3 millimeters (mm), the extended region may be used as the blocked region. A specific extension manner may be implemented by using an algorithm.

Manner 1 may be implemented in a mechanical manner, an electromagnetic manner, or an optical manner. The following provides descriptions separately by using Manner 1.1 (Manner 1 is implemented in the mechanical manner) and Manner 1.2 (Manner 1 is implemented in the electromagnetic manner or an optical manner).

Manner 1.1: Manner 1 is implemented in the mechanical manner.

In a possible implementation of Manner 1.1, capacitance change information of a region on the screen of the device may be obtained, and a region in which capacitance changes may be determined as the touched region. In this case, an alternative description of Manner 1 is: obtain capacitance change information of a region on the screen of the device, and determine the blocked region based on a region in which capacitance changes. Specifically, the capacitance change information of the region on the screen of the device may be obtained, the region in which the capacitance changes may be determined as the touched region on the screen of the device, and the blocked region may be determined based on the touched region.

For example, refer to FIG. 6. A screen of a device includes a front dielectric layer, a capacitance layer, a display layer, an antenna layer, and a rear dielectric layer from the outside (a screen surface of the device) to the inside. The front dielectric layer may be, for example, glass or resin. The capacitance layer integrates a layer of capacitance material, for example, an ultrasonic thin film sensing material, which may be specifically an ultrasonic thin film sensor (for example, a thin film transistor (thin film transistor, TFT)). The display layer may be, for example, an organic light-emitting diode (organic light-emitting diode, OLED) or a liquid crystal display (liquid crystal display, LCD). The antenna layer includes an antenna, a radio frequency (radio frequency, RF), a printed circuit board (printed circuit board, PCB), and the like. The rear dielectric layer may be, for example, metal. Antennas are discretely distributed on a plane where the antenna layer is located. When a user touches the screen, pressure of the screen is changed, causing a change of a capacitance feature of the capacitance layer. Which regions on the screen are touched may be determined based on the feature. In this method, a feature of the screen of the device may be fully utilized to conveniently and quickly determine which regions on the screen are blocked.

In another possible implementation of Manner 1.1, a pressure sensor may be disposed under the screen of the device. In this case, pressure change information of a region on the screen of the device may be obtained, and a region in which pressure changes may be determined as the touched region. In this case, an alternative description of Manner 1 is: obtain pressure change information of a region on the screen of the device, and determine the blocked region based on a region in which pressure changes. Specifically, the pressure change information of the region on the screen of the device may be obtained, the region in which the pressure changes may be determined as the touched region on the screen of the device, and the blocked region may be determined based on the touched region.

Manner 1.2: Manner 1 is implemented in the electromagnetic manner or the optical manner.

In Manner 1.2, the touched region on the screen of the device may be determined by using one or more sensors. In this case, an alternative description of Manner 1 is: perform blocking detection on the screen of the device by using one or more sensors, to obtain a detection result; and determine the blocked region based on the detection result. Specifically, the touched region on the screen of the device may be determined by using the one or more sensors, and the blocked region may be determined based on the touched region.

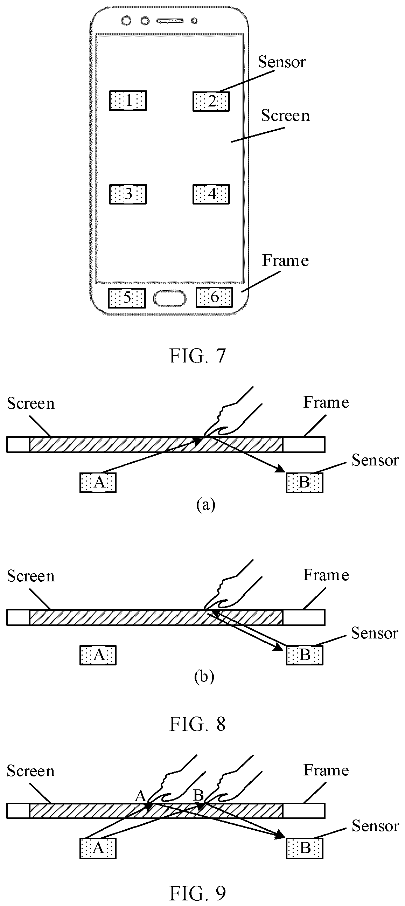

The sensor (for example, sensors 1 to 4 in FIG. 7) may be located below the screen of the device, or the sensor (for example, a sensor 5 and a sensor 6 in FIG. 7) may be located below a frame of the device. The sensor may be an electromagnetic sensor (for example, a distance sensor), an optical sensor (for example, an infrared detector, a femtosecond laser (time of flight, ToF)), or the like.

In Manner 1.2, the sensor may detect the blocked region in an active manner, or may detect the blocked region in a passive manner. The active manner refers to a manner in which the sensor sends a signal (for example, an electromagnetic signal or an optical signal (such as non-visible light)), and then performs detection. The passive manner refers to a manner in which the sensor does not send a signal and directly performs detection.

When detection is performed in the active manner, there are two signal detection methods. In a first method, refer to (a) in FIG. 8. A sensor (for example, a sensor A) may send a signal, and another sensor (for example, a sensor B) may receive a signal reflected by an obstacle. In another implementation method, refer to (b) in FIG. 8. A sensor (for example, the sensor B) sends a signal, and then receives the signal reflected by the obstacle. For the electromagnetic sensor, the signal may be an electromagnetic signal. For the optical sensor, the signal may be an optical signal. It may be understood that at least two sensors are required in the first method.

An implementation of determining, by performing signal detection, the touched region on the screen of the device may be any one of the following implementations.

Implementation 1: Which regions on the screen of the device are touched is determined based on strength of the signal reflected by the obstacle.

A longer signal transmission distance indicates greater signal attenuation. Therefore, the strength of the signal reflected by the obstacle may represent a signal transmission distance, and which regions on the screen of the device are touched may be determined based on the strength of the signal reflected by the obstacle.

For example, for a position (for example, a position A) on the screen, when the user touches the position A, and a transmitted signal of the sensor A is attenuated by 3 decibels (decibels, dBs) compared with a received signal of the sensor B, if strength of the transmitted signal of the sensor A is 8 dB, and strength of the received signal of the sensor B is 3 dB, it indicates that the signal is attenuated by 5 dB. In this case, it is considered that the position A is not touched. When the user touches the position A, a value of attenuation obtained by comparing the transmitted signal of the sensor A with the received signal of the sensor B may be obtained through testing when the user touches the position A, or may be obtained through calculation based on a value of signal attenuation at another position (for example, the position B) and a geometric relationship between the position B and the position A. This is not limited in this application.

Implementation 2: A phase difference between a transmitted signal and a received signal is detected by using a sensor, and a time difference between a signal sending moment and a signal receiving moment is obtained through calculation based on the phase difference between the transmitted signal and the received signal, to determine a signal transmission distance, and to determine, based on the distance, which regions on the screen of the device are touched. The phase difference Δη = 2 * π * c * Δt/λ, where c refers to a speed of light, Δt refers to the time difference between the signal sending moment and the signal receiving moment, λ refers to a wavelength, and "*" refers to "multiplied by". In this case, Δt may be obtained through calculation based on Δη, where Δt * c is the signal transmission distance.

When different positions on the screen of the device are touched, signal transmission distances are different. Therefore, which regions on the screen of the device are touched may be determined based on the signal transmission distance. For example, refer to FIG. 9. When a user touches a position A, and an actual signal transmission distance is 20 mm, if a transmission distance that is obtained through calculation based on Δη and that is detected by a sensor is 22 mm, it indicates that the position A is not touched. When the user touches the position A, the actual signal transmission distance may be obtained through testing when the user touches the position A, or may be obtained through calculation based on an actual signal transmission distance at another position (for example, a position B) and a geometric relationship between the position B and the position A. This is not limited in this application.

A method for determining the signal transmission distance based on Implementation 2 has high accuracy.

Implementation 3: A time difference between a signal sending moment and a signal receiving moment is detected by using a sensor, to determine a signal transmission distance, and to determine, based on the distance, which regions on the screen of the device are touched.

The sensor configured to detect the time difference may be a ToF. For an implementation process after the time difference is determined, refer to Implementation 2. Details are not described again.

When the blocked region is detected in the passive manner, if an optical signal received by the optical sensor from a position is interrupted, it is determined that the position is blocked. The optical signal may be one or more frequency components of natural light, for example, infrared light, near ultraviolet light, or a visible optical signal.

Manner 2: Determine the blocked region on the screen of the device based on a position of an obstacle, in a first space, that blocks the screen of the device, where projection of a bottom surface of the first space on a horizontal plane is a screen surface of the device, and a height is a preset value (marked as a first preset value).

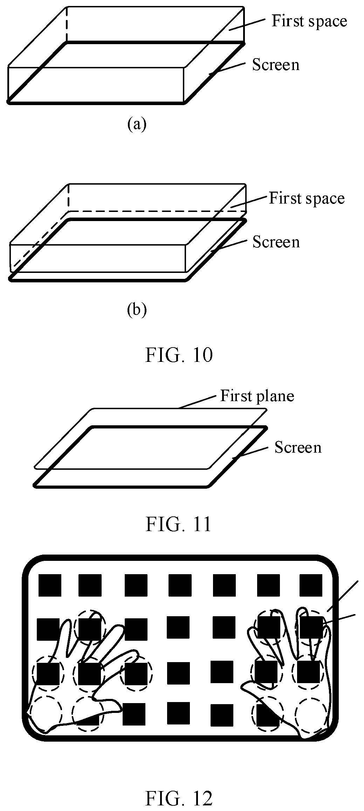

In one case, refer to (a) in FIG. 10. A bottom surface of a first space is a screen surface of a device. In another case, refer to (b) in FIG. 10. The bottom surface of the first space is a plane whose distance from the screen surface of the device is a second preset value.

The first preset value and/or the second preset value may be preset. For example, the first preset value may be 30 mm, and the second preset value may be 1 mm. The first preset value and/or the second preset value may alternatively relate to one or more of a size of the device, a size of the screen of the device, a transmit power of a communication module of the device, a receive power of the communication module of the device, a communication service type carried by a signal transmitted by using the first antenna set, a frequency for touching the screen for performing a service by the device in a communication process, and a detection capability of the device for the antenna-under-display blocking information. For example, when the size of the device is larger, the first preset value and/or the second preset value may be larger, where the first preset value may be less than the size of the device. When the screen size of the device is larger, the first preset value and/or the second preset value may be larger, where the first preset value may be less than the screen size of the device. When the transmit power of the communication module of the device is larger, the first preset value and/or the second preset value may be smaller. When the receive power of the communication module of the device is larger, the first preset value and/or the second preset value may be smaller. When a power corresponding to the communication service type carried by the signal transmitted by using the first antenna set is lower, the first preset value and/or the second preset value may be larger (for example, the first preset value and/or the second preset value may be larger in wireless fidelity (wireless fidelity, Wi-Fi) communication and near field communications than in cellular communication). A higher frequency for touching the screen for performing the service by the device in the communication process may indicate a smaller first preset value and/or a smaller second preset value. For example, a first preset value and/or a second preset value corresponding to a real-time interaction service may be lower than a first preset value and/or a second preset value corresponding to a service that is operated only by touching a button. A weaker detection capability of the device for the antenna-under-display blocking information, for example, a weaker processing capability of a sensor or a detection module that performs detection, may indicate a smaller first preset value and/or a smaller second preset value.

Manner 2 is a non-contact (that is, contact between the obstacle and the screen is not required) manner of obtaining the blocked region on the screen of the device.

When Manner 2 is implemented in the electromagnetic manner or the optical manner, an alternative description of Manner 2 is: perform blocking detection on a first space by using one or more sensors; and determine the blocked region based on a region formed by projecting a position of an obstacle that blocks the screen of the device and that is in the first space onto the screen. Specifically, the region formed by projecting the position of the obstacle that blocks the screen of the device and that is in the first space onto the screen may be determined as the blocked region. Alternatively, a region obtained by extending a part of region outwards based on the region formed by projecting the position of the obstacle that blocks the screen of the device and that is in the first space onto the screen may be determined as the blocked region. A specific implementation is similar to that in Manner 1, and may be understood with reference to that in Manner 1, and details are not described herein again.

For descriptions of the sensor and a detection principle of the sensor, refer to the foregoing descriptions. Details are not described again. A difference lies in that in Manner 1, the sensor is configured to detect which regions on the screen of the device are touched, and the sensor herein is configured to detect the position of the obstacle in the first space.

In Manner 2, when strength of a received signal of the sensor is used to determine whether an antenna-under-display in a blocked region is blocked, strength of a signal (that is, the received signal of the sensor) reflected by an obstacle that blocks the region is marked as α. When α > Thrl, it is considered that the antenna-under-display is blocked. When Thr2 < α ≤ Thrl, because the obstacle is far away from the screen of the device, in some cases (for example, when a communication quality requirement is high or a transmit power of the device is low), it may be considered that the antenna-under-display is blocked. Both Thr1 and Thr2 herein are thresholds of the strength of the signal. When a signal transmission distance is used to determine whether an antenna-under-display in a blocked region is blocked, the signal transmission distance is marked as β. When β < Thr3, it is considered that the antenna-under-display is blocked. When Thr3 ≤ β < Thr4, because the obstacle is far away from the screen of the device, in some cases (for example, when the communication quality requirement is high or the transmit power of the device is low), it may be considered that the antenna-under-display is blocked. Both Thr3 and Thr4 herein are thresholds of the signal transmission distance. In this part, a decision result of whether the antenna-under-display is blocked is not absolutely being blocked or being unblocked. Such a decision may be referred to as a soft decision. In another part of this application, a decision result of whether the antenna-under-display is blocked is either being blocked or being unblocked. Such a decision may be referred to as a hard decision.

Manner 3: Determine the blocked region based on a touched region of a first plane, where projection of the first plane on a horizontal plane is a screen surface of the device, and a height of the first plane relative to the screen of the device is a third preset value (for details, refer to FIG. 11 for understanding).

A process of determining the blocked region in Manner 3 is similar to a process of determining the blocked region in Manner 1, and the screen of the device in Manner 1 is used as the first plane for understanding. A difference lies in that the obstacle cannot generate pressure on the screen when touching the first plane, therefore, Manner 1.1 in Manner 1 cannot be used to determine the blocked region herein.

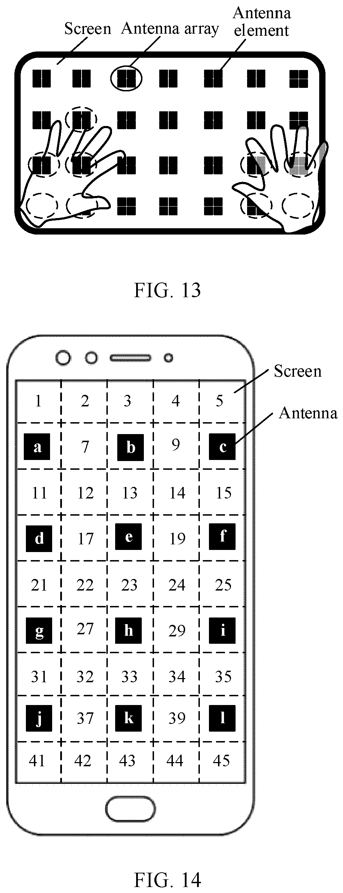

Step (12) includes two manners of determining the blocked antenna-under-display. One manner is directly determining that an antenna-under-display in the blocked region on the screen of the device is the blocked antenna-under-display. For example, refer to FIG. 12. In FIG. 12, an antenna may be an antenna element or may be an antenna array. In this case, antennas circled by dashed lines in FIG. 12 may be determined as unblocked antenna-under-displays. The other manner is, when an antenna-under-display is an antenna-under-display array, and a ratio of a quantity of antenna elements in the blocked region on the screen of the device to a quantity of antenna elements in an antenna array to which the antenna elements in the blocked region on the screen of the device belongs is greater than a first threshold, determining that the antenna-under-display in the blocked region on the screen of the device is a blocked antenna-under-display. For example, refer to FIG. 13. In FIG. 13, an antenna is antenna arrays, and each antenna array includes four antenna elements. If the first threshold is 0.5, antennas circled by dashed lines in FIG. 13 are determined as blocked antenna-under-displays.

During specific implementation of step 401, region division may be performed on the screen of the device (marked as Case 1), space division may be performed on the first space (marked as Case 2), or region division may be performed on the first plane (marked as Case 3), and the blocked antenna-under-display is determined based on a divided region or space. The following describes, by using examples, the method provided in this example of this application in Case 1, Case 2, and Case 3.

Case 1: Region division is performed on the screen of the device.

In Case 1, the screen of the device includes a plurality of first regions, where there is a correspondence between a first region and an antenna-under-display. For example, refer to FIG. 14. A screen of a device is divided into 45 first regions numbered 1, 2, 3, ..., and 45 respectively. 12 antennas-under-display are numbered a, b, c, ..., and 1 respectively. A correspondence between an antenna-under-display and a first region is established. For example, for the correspondence between the antenna-under-display and the first region in FIG. 14, refer to Table 1.

**Table 1**

| First region | Antenna |
|---|---|
| 6 | a |
| 8 | b |
| 10 | c |
| 16 | d |
| 18 | e |
| 20 | f |
| 26 | g |
| 28 | h |
| 30 | i |
| 36 | j |
| 38 | k |
| 40 | l |

It should be noted that, in FIG. 14, an example in which one first region corresponds to one antenna-under-display is used for drawing. Actually, one first region may correspond to a plurality of antennas-under-display, or a plurality of first regions may correspond to one antenna-under-display.

In Case 1, during specific implementation, step 401 may include: when a blocked proportion of a first region corresponding to a first antenna-under-display is greater than a second threshold, it is determined that the first antenna-under-display is blocked; and when the blocked proportion of the first region corresponding to the first antenna-under-display is less than the second threshold, it is determined that the first antenna-under-display is not blocked. The first antenna-under-display is one of the antennas-under-display of the device. When the blocked proportion of the first region corresponding to the first antenna-under-display is equal to the second threshold, it may be determined that the first antenna-under-display is blocked, or it may be determined that the first antenna-under-display is not blocked.

In this case, if a blocked proportion or blocked proportions of one or some first regions are greater than the second threshold, antennas in the one or some first regions are blocked. For example, based on the example shown in Table 1, if a blocked proportion of the first region 6 is greater than the second threshold, it may be determined that the antenna a is blocked. If blocked proportions of the first region 6 and the first region 10 are greater than the second threshold, it may be determined that the antenna a and the antenna c are blocked.

In Case 1, a blocked region of the first region corresponding to the first antenna-under-display may be detected in the mechanical manner, the electromagnetic manner, or the optical manner in the foregoing Manner 1. For details, refer to the foregoing descriptions. Details are not described again. If detection is performed in the electromagnetic manner or the optical manner, one or more sensors may be disposed in each first region to detect whether an antenna-under-display in the first region is blocked. Alternatively, one or more sensors may be disposed in a plurality of first regions to detect whether antennas-under-display in the plurality of first regions are blocked. This is not limited in this application.

Case 2: Space division is performed on the first space.

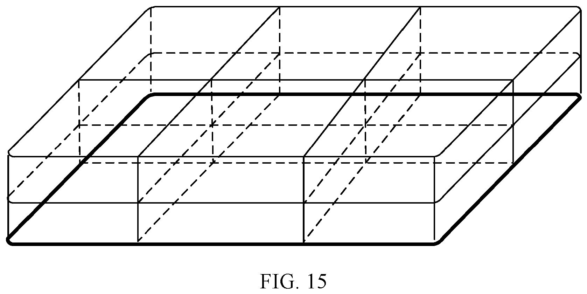

In Case 2, the first space includes M * N subspaces, M is an integer greater than 1, N is an integer greater than 0, a bottom surface of the first space includes M second regions, there is a correspondence (similar to the correspondence between the first region and the antenna-under-display in Case 1, and reference may be made for understanding) between a second region and an antenna-under-display. A space that uses the second region as a bottom surface and whose height is the preset value includes N subspaces, and heights of the N subspaces corresponding to a same second region may be the same or may be different. This is not limited in this application. For example, the bottom surface of the first space is the screen of the device. Refer to FIG. 15. If the first preset value is 20 mm, M is 6, and N is 2, the screen of the device is divided into six second regions, where each space that uses the second region as a bottom surface and whose height is 20 mm includes two subspaces. In this case, the first space includes 12 subspaces, and there is a correspondence (not shown in FIG. 15) between an antenna-under-display and a second region.

In Case 2, in a first implementation, during specific implementation, step 401 may include:
when a ratio of an area formed by projecting an obstacle that blocks the screen of the device and that is in a first subspace onto the screen to an area of a second region corresponding to a first antenna-under-display is greater than a third threshold, it is determined that the first antenna-under-display is blocked; and
when the ratio of the area formed by projecting the obstacle that blocks the screen of the device and that is in the first subspace onto the screen to the area of the second region corresponding to the first antenna-under-display is less than the third threshold, it is determined that the first antenna-under-display is not blocked.

The first subspace is a subspace, closest to the screen of the device among subspaces occupied by the obstacle, in the N subspaces corresponding to the second region corresponding to the first antenna-under-display. The first antenna-under-display is one of the antennas-under-display of the device, and the third threshold corresponds to the first subspace. When the ratio of the area formed by projecting the obstacle that blocks the screen of the device and that is in the first subspace onto the screen to the area of the second region corresponding to the first antenna-under-display is equal to the third threshold, it may be determined that the first antenna-under-display is blocked, or it may be determined that the first antenna-under-display is not blocked.

It may be understood that, there may be a plurality of subspaces that are of the N subspaces of the second region corresponding to the first antenna-under-display and that are occupied by the obstacle. An obstacle in a subspace (that is, the first subspace) closest to the screen of the device blocks the screen most severely. Therefore, it only needs to be determined whether the ratio of the area formed by projecting the obstacle that blocks the screen of the device and that is in the first subspace onto the screen to the area of the second region corresponding to the first antenna-under-display is greater than the third threshold. After it is determined whether the ratio of the area formed by projecting the obstacle that blocks the screen of the device and that is in the first subspace onto the screen to the area of the second region corresponding to the first antenna-under-display is greater than the third threshold, whether the first antenna-under-display is blocked is determined. A process is similar to that in Case 1, and may be understood with reference to that in Case 1. Details are not described again. In this case, one or more sensors may be disposed on a region formed by projecting each second region onto the screen, to detect whether an antenna-under-display corresponding to the second region is blocked. Alternatively, one or more sensors may be disposed on regions formed by projecting a plurality of second regions onto the screen, to detect whether antennas-under-display corresponding to the plurality of second regions are blocked. This is not limited in this application.

The area formed by projecting the obstacle that blocks the screen of the device and that is in the first subspace onto the screen may be detected by using a sensor. For a detection principle, refer to the foregoing Manner 2, and details are not described again.

The first subspace corresponds to the third threshold, and another subspace may correspond to another threshold. A process of determining whether an antenna-under-display corresponding to the another subspace is blocked is similar to a process of determining whether an antenna-under-display corresponding to the first subspace is blocked, and details are not described again. Thresholds corresponding to different subspaces may be the same or different. This is not limited in this application. In a possible implementation, thresholds corresponding to a layer of subspaces that have a same distance from the screen of the device may be the same, and thresholds corresponding to subspaces that have different distances from the screen of the device may be different. A longer distance from the screen of the device indicates a less impact on an antenna-under-display. Therefore, a threshold corresponding to a subspace that is farther away from the screen of the device may be larger.

In Case 2, in a second implementation, N = 1, and during specific implementation, step 401 may include:
when strength of a signal that is received by a sensor configured to detect whether an antenna-under-display corresponding to the second region (assumed to be a second region 1) is blocked, and that is reflected by an obstacle that passes through a first subspace corresponding to the second region 1 and that blocks the screen of the device is greater than a fourth threshold, it is determined that the antenna-under-display corresponding to the second region 1 is blocked; and
when the strength of the signal that is received by the sensor configured to detect whether the antenna-under-display corresponding to the second region 1 is blocked, and that is reflected by the obstacle that passes through the first subspace corresponding to the second region 1 and that blocks the screen of the device is greater than a fifth threshold and is less than or equal to the fourth threshold, if necessary (for example, if a communication quality requirement is high or a transmit power of the device is low), it may be determined that the antenna-under-display corresponding to the second region 1 is blocked. In other words, when the communication quality requirement is high or the transmit power of the device is low, the antenna-under-display corresponding to the second region 1 is not used for signal transmission, to avoid reducing communication quality or increasing the transmit power of the device because of the blocked antenna-under-display.

The strength of the signal that is received by the sensor configured to detect whether the antenna-under-display corresponding to the second region 1 is blocked, and that is reflected by the obstacle that passes through the first subspace corresponding to the second region 1 and that blocks the screen of the device is marked as α, the fourth threshold is marked as Thrl, and the fifth threshold is marked as Thr2. In other words, when α > Thrl, because the obstacle is close to the screen of the device, it is considered that the antenna-under-display corresponding to the second region 1 is blocked. When Thr2 < α ≤ Thrl, because the obstacle is far away from the screen of the device, in some cases, it may be considered that the antenna-under-display corresponding to the second region 1 is blocked. In this part, a decision result of whether the antenna-under-display is blocked is not absolutely being blocked or being unblocked. Such a decision may be referred to as a soft decision. In another part of this application, a decision result of whether the antenna-under-display is blocked is either being blocked or being unblocked. Such a decision may be referred to as a hard decision.

In Case 2, in a third implementation, N = 1, and during specific implementation, step 401 may include:
when a signal transmission distance determined based on a detection result of a sensor (marked as a first sensor) configured to detect whether an antenna-under-display corresponding to the second region (assumed as a second region 2) is blocked is less than a sixth threshold, it is determined that the antenna-under-display corresponding to the second region 2 is blocked; and
when the signal transmission distance determined based on the detection result of the first sensor is greater than or equal to the sixth threshold and less than a seventh threshold, if necessary (for example, if the communication quality requirement is relatively high or the transmit power of the device is relatively low), it may be determined that the antenna-under-display corresponding to the second region 2 is blocked. In other words, when the communication quality requirement is high or the transmit power of the device is low, the antenna-under-display corresponding to the second region 2 is not used for signal transmission, to avoid reducing communication quality or increasing the transmit power of the device because of the blocked antenna-under-display.

The signal transmission distance determined based on the detection result of the first sensor is marked as β, the sixth threshold is marked as Thr3, and the seventh threshold is marked as Thr4. To be specific, when β < Thr3, it is considered that the antenna-under-display is blocked. When Thr3 ≤ β < Thr4, because the obstacle is far away from the screen of the device, in some cases (for example, when the communication quality requirement is high or the transmit power of the device is low), it may be considered that the antenna-under-display is blocked. In this part, a decision result of whether the antenna-under-display is blocked is not absolutely being blocked or being unblocked. Such a decision may be referred to as a soft decision. In another part of this application, a decision result of whether the antenna-under-display is blocked is either being blocked or being unblocked. Such a decision may be referred to as a hard decision.

In the foregoing example, in one case, Thr2 < α ≤ Thr1 may alternatively be replaced with Thr2 ≤ α ≤ Thr1. In another case, α > Thr1 may be replaced with α ≥ Thrl, and in this case, Thr2 < α ≤ Thr1 may alternatively be replaced with Thr2 ≤ α < Thr1 or Thr2 < α < Thr1. Similarly, in one case, Thr3 ≤ β < Thr4 may be replaced with Thr3 ≤ β ≤ Thr4. In another case, β < Thr3 may be replaced with β ≤ Thr3, and in this case, Thr3 ≤ β < Thr4 may be replaced with Thr3 < β ≤ Thr4 or Thr3 < β < Thr4.

In the foregoing example, the first threshold, the second threshold, the third threshold, the fourth threshold, the fifth threshold, the sixth threshold, and the seventh threshold may all be preset.

Case 3: Region division is performed on the first plane.

In Case 3, the first plane includes a plurality of third regions, where there is a correspondence (similar to the correspondence between the first region and the antenna-under-display in Case 1, and reference may be made for understanding) between a third region and an antenna-under-display. For descriptions of the first plane, refer to the foregoing descriptions, and details are not described again. A process of determining a blocked antenna-under-display in Case 3 is similar to that in Case 1, and the screen of the device in Case 1 is replaced with the first plane for understanding. For the process of determining the blocked region in Case 3, refer to related descriptions in Manner 3, and details are not described again.

In the foregoing Manner 2, Manner 3, Case 2, and Case 3, the obstacle does not need to touch the screen of the device. Therefore, it may be determined whether the screen is blocked by an obstacle that is untouched but suspended at a short distance, for example, a palm part or an arm part. This can determine more accurately which antennas-under-display are blocked.

Optionally, during specific implementation, step 402 includes: determining the second antenna set based on the antenna-under-display blocking information; and determining the first antenna set from the second antenna set.

When the first antenna set is determined, a quantity of antennas in the first antenna set may be determined based on a transmission mode. For example, if the transmission mode is the SISO, one antenna is selected from the second antenna set as the first antenna set. If the transmission mode is 4 * 4 (4 before "*" indicates a quantity of transmit antennas, and 4 after "*" indicates a quantity of receive antennas) MIMO, four antennas are selected from the second antenna set as the first antenna set. If the transmission mode is the beamforming, antennas of a corresponding quantity are selected from the second antenna set as the first antenna set based on a quantity of antennas required by the beamforming. For ease of signal transmission, the antennas in the first antenna set may be antennas having a same polarization direction.

It should be noted that, when a quantity of antennas in the second antenna set is less than a quantity of antennas required by the transmission mode, current communication may be ended, or the current communication may be continued but a quantity of used antennas is reduced. For example, if the transmission mode is 4 * 4 MIMO, but the quantity of antennas in the second antenna set is 2, the transmission mode may be switched to 2 * 2 MIMO.

Optionally, the method further includes: detecting the antenna-under-display blocking information of the device periodically or under some triggering conditions (for example, when there is a communication requirement, and link quality of a communication link does not meet the requirement); and updating the second antenna set based on the detected antenna-under-display blocking information of the device. Hand movements of the user change continuously in a process in which the user operates the device. Therefore, blocking of the antenna-under-display also keeps changing. In this optional method, the second antenna set is updated. This can ensure that a selected first antenna set is determined based on a latest second antenna set, to ensure communication quality.

After the second antenna set is updated, it may be determined whether to update the first antenna set, and when it is determined to update the first antenna set, the first antenna set is further updated. For example, when it is determined that the quantity of antennas in the second antenna set increases, it means that more antennas may be used for communication (for example, an antenna gain of the beamforming may be greater, and a specification of the MIMO may be higher). In this case, it may be determined to update the first antenna set.

Optionally, after the first antenna set is determined based on the antenna-under-display blocking information, the foregoing method further includes: determining whether link quality of a communication link of the device meets a requirement, and if the link quality does not meet the requirement, updating the first antenna set; or receiving indication information, where the indication information indicates to update the first antenna set, or indicates to update the first antenna set when the link quality of the communication link does not meet the requirement. In this optional method, the first antenna set may be updated based on the link quality of the communication link, so that a currently used first antenna set can meet the link quality requirement of the communication link.

A network device may send the indication information to the device when the link quality of the communication link of the device does not meet the requirement. For example, when the network device discovers that current quality of service (quality of service, QoS) of the communication link is lower than QoS required by the communication link, when the network device discovers that retransmission occurs on the communication link for a plurality of times, or when the network device discovers that a block error rate (block error rate, BLER) of the communication link cannot meet a system requirement, it may be considered that the link quality of the communication link does not meet the requirement.

It should be noted that in a complete communication process (for example, a game running process), user operation behaviors may change in different time periods. As a result, an antenna-under-display blocking situation also changes accordingly. In this case, the following solution 1 or solution 2 may be used to implement the foregoing method.

### Solution 1

In Solution 1, after the first antenna set is determined, when the link quality of the communication link does not meet the requirement, updating of the first antenna set (or the second antenna set) is triggered.

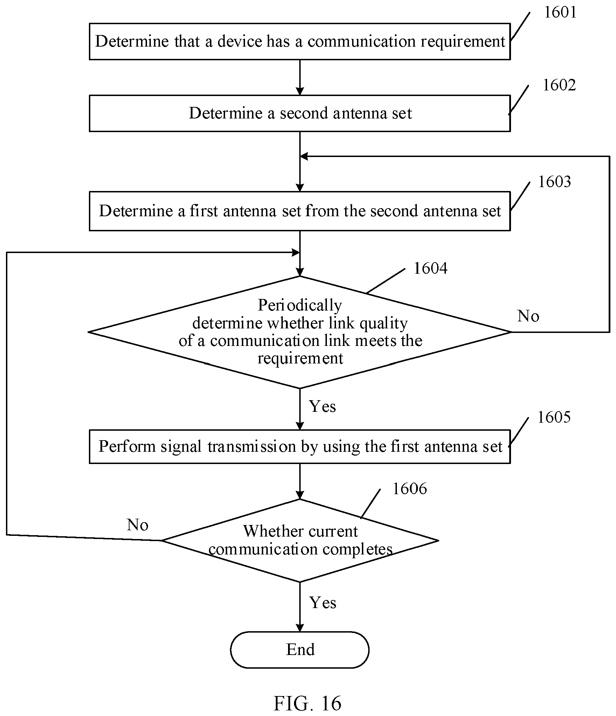

Refer to FIG. 16. During specific implementation, Solution 1 includes the following steps.
1601. Determine that a device has a communication requirement.
1602. Determine a second antenna set.
1603. Determine a first antenna set from the second antenna set.
1604. Periodically determine whether link quality of a communication link meets the requirement.

If the link quality of the communication link meets the requirement, perform steps 1605 and 1606. If the link quality of the communication link does not meet the requirement, return to step 1602 or step 1603 (an example of returning to step 1603 is used for illustration in FIG. 16).
1605. Perform signal transmission by using the first antenna set.
1606. Determine whether current communication completes.

If the current communication completes, a process ends. If the current communication does not complete, return to step 1604.

### Solution 2

In Solution 2, after the first antenna set is determined, when the link quality of the communication link does not meet the requirement, updating of the first antenna set (or the second antenna set) is triggered, and the second antenna set may be periodically updated.

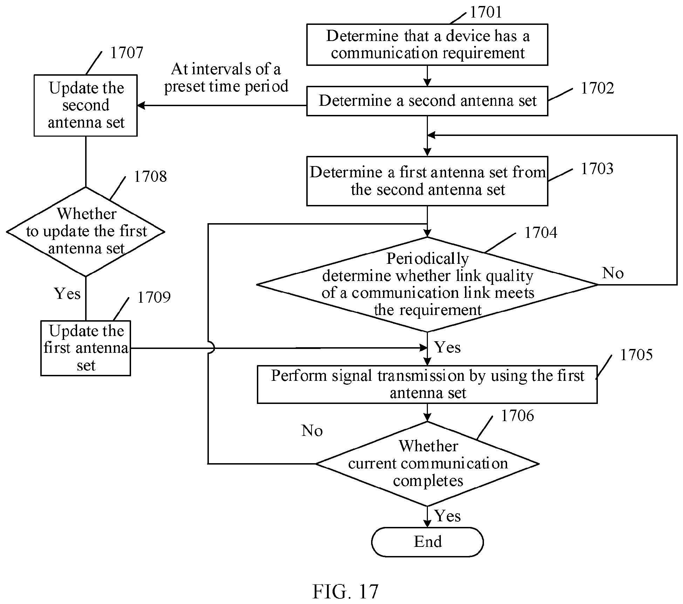

Refer to FIG. 17. During specific implementation, Solution 2 includes the following steps.

Steps 1701 to 1706 are the same as steps 1601 to 1606 respectively.
1707. Update a second antenna set at intervals of a preset time period (that is, periodically update the second antenna set).
1708. Determine whether to update a first antenna set.

If it is determined to update the first antenna set, perform action 1709. If it is determined not to update the first antenna set, no action is performed.

1709. Update the first antenna set.

After step 1709 is performed, action 1705 is performed.

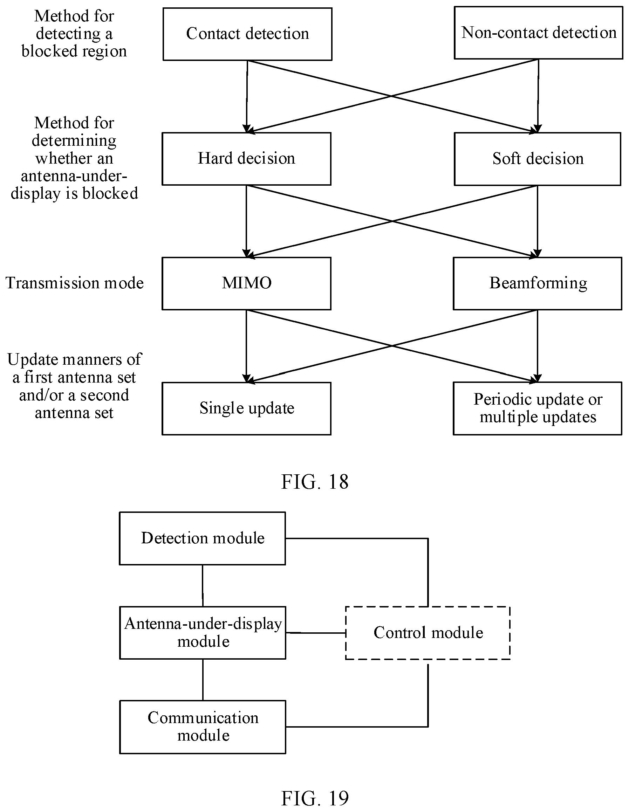

During specific implementation of the method provided in the foregoing examples, solutions may be combined. For example, refer to FIG. 18. All solutions connected together by using arrows may be combined.

In examples of this application, in addition to determining a blocked region by using a capacitance layer on a screen of a device, the foregoing sensor, and the like, the blocked region may be alternatively determined by positioning an obstacle or the like. For example, relative spatial positions of the obstacle and the device are directly positioned. For example, a position of the device is set to a spatial origin (0, 0, 0), and it is detected that a spatial coordinate of the obstacle is (x, y, z). Then, a blocked region on a screen of the device is determined through geometric calculation.

The foregoing mainly describes the solutions of examples of this application from a perspective of a method. It may be understood that, to implement the foregoing functions, an antenna-under-display management apparatus includes at least one of a corresponding hardware structure and a corresponding software module for performing each function. A person skilled in the art should easily be aware that, in combination with units and algorithm steps of the examples described in examples disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In examples of this application, the antenna-under-display management apparatus may be divided into functional units based on the foregoing method examples. For example, each functional unit may be obtained through division based on each corresponding function, or two or more functions may be integrated into one processing unit. The integrated unit may be implemented in a form of hardware, or may be implemented in a form of a software functional unit. It should be noted that, in examples of this application, division into the units is an example, and is merely a logical function division. In actual implementation, another division manner may be used.

For example, an execution body of the method provided in examples of this application may include a plurality of functional modules configured to perform the foregoing method. For example, it is assumed that the method provided in examples of this application is performed by a device in this application. Refer to FIG. 19. The device includes: a detection module, an antenna-under-display module, and a communication module. Optionally, the device further includes a control module. The detection module is configured to obtain antenna-under-display blocking information of the device, and determine whether an antenna-under-display is blocked. This may be specifically implemented in the foregoing contact or non-contact manner. The communication module is configured to communicate with another device, for example, perform signal transmission with the another device by using a first antenna set. The antenna-under-display module is required by the communication module to perform signal transmission. The antenna-under-display module is configured to send and/or receive an electromagnetic signal. If the communication module is an optical communication module, the antenna-under-display module is configured to send and/or receive an optical signal (Note: in this application, the antenna-under-display module is referred to as an antenna for convenience, and actually, the antenna-under-display module is usually referred to as a sensor in the field of optical communication, that is, a transmit optical sensor or a receive optical sensor). The control module is configured to control the foregoing three functional modules, to implement the method provided in this application. The communication module/the control module is further configured to perform one or more of the following actions: determining the first antenna set from a second antenna set, establishing a correspondence between one or more of a first region, a second region, and a third region and an antenna-under-display, when a quantity of antennas in the second antenna set is less than a quantity of antennas required by a transmission mode, determining whether to end current communication or reduce a quantity of used antennas, updating the first antenna set, updating the second antenna set, determining whether to update the first antenna set, and the like.

The detection module may be a capacitance layer on a screen of the device, the foregoing sensor, or the like. The communication module may be a communication interface, a transceiver (for example, a transceiver circuit), an input interface and/or an output interface, and the like. The control module may be a processor.

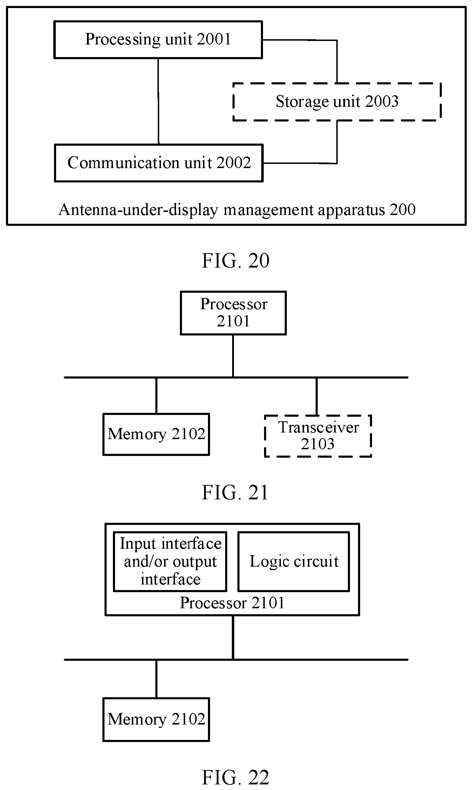

For another example, FIG. 20 is a possible schematic diagram of a structure of the antenna-under-display management apparatus (denoted as an antenna-under-display management apparatus 200) in the foregoing examples. The antenna-under-display management apparatus 200 includes a processing unit 2001 and a communication unit 2002. Optionally, the antenna-under-display management apparatus 200 further includes a storage unit 2003. The processing unit 2001 is configured to control and manage an action of the antenna-under-display management apparatus 200. For example, the processing unit 2001 is configured to perform steps in FIG. 4, FIG. 16, and FIG. 17, and/or an action performed by the antenna-under-display management apparatus 200 in another process described in examples of this application. The processing unit 2001 may communicate with another network entity by using the communication unit 2002, for example, perform signal transmission with a network device. The storage unit 2003 is configured to store program code and data of the antenna-under-display management apparatus 200.

For example, the antenna-under-display management apparatus 200 may be a device, or may be a chip or a chip system. When the antenna-under-display management apparatus 200 is a device, the processing unit 2001 may be a processor; and the communication unit 2002 may be a communication interface, a transceiver, or an input interface and/or an output interface. Optionally, the transceiver may be a transceiver circuit. Optionally, the input interface may be an input circuit, and the output interface may be an output circuit.

When the antenna-under-display management apparatus 200 is a chip or a chip system, the communication unit 2002 may be a communication interface, an input interface and/or an output interface, an interface circuit, an output circuit, an input circuit, a pin, a related circuit, or the like on the chip or the chip system. The processing unit 2001 may be a processor, a processing circuit, a logic circuit, or the like.

When an integrated unit in FIG. 20 is implemented in a form of a software functional module and sold or used as an independent product, the integrated unit may be stored in a computer-readable storage medium. Based on such an understanding, the technical solutions of examples of this application essentially, or the part contributing to the current technology, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in examples of this application. The storage medium that stores the computer software product includes any medium that can store program code, such as a USB flash drive, a removable hard disk, a read-only memory (read-only memory, ROM), a random access memory (random access memory, RAM), a magnetic disk, or an optical disc.

An example of this application further provides a schematic diagram of a hardware structure of an antenna-under-display management apparatus. Refer to FIG. 21 or FIG. 22. The antenna-under-display management apparatus includes a processor 2101, and optionally, further includes a memory 2102 connected to the processor 2101.

The processor 2101 may be a general-purpose central processing unit (central processing unit, CPU), a microprocessor, an application-specific integrated circuit (application-specific integrated circuit, ASIC), or one or more integrated circuits configured to control program execution of the solutions of this application. The processor 2101 may alternatively include a plurality of CPUs, and the processor 2101 may be a single-core (single-CPU) processor or a multi-core (multi-CPU) processor. The processor herein may be one or more devices, circuits, or processing cores configured to process data (for example, computer program instructions).

The memory 2102 may be a ROM or another type of static storage device that can store static information and instructions, a RAM or another type of dynamic storage device that can store information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. This is not limited in examples of this application. The memory 2102 may exist independently (in this case, the memory 2102 may be located outside the antenna-under-display management apparatus, or may be located inside the antenna-under-display management apparatus), or may be integrated with the processor 2101. The memory 2102 may include computer program code. The processor 2101 is configured to execute the computer program code stored in the memory 2102, to implement the method provided in examples of this application.

In a first possible implementation, refer to FIG. 21. The antenna-under-display management apparatus further includes a transceiver 2103. The processor 2101, the memory 2102, and the transceiver 2103 are connected through a bus. The transceiver 2103 is configured to communicate with another device or a communication network. Optionally, the transceiver 2103 may include a transmitter and a receiver. A component configured to implement a receiving function in the transceiver 2103 may be considered as a receiver. The receiver is configured to perform a receiving step in examples of this application. A component configured to implement a sending function in the transceiver 2103 may be considered as a transmitter. The transmitter is configured to perform a sending step in examples of this application. In this case, the processor 2101 is configured to control and manage an action of the antenna-under-display management apparatus. For example, the processor 2101 is configured to perform steps in FIG. 4, FIG. 16, and FIG. 17, and/or an action performed by the antenna-under-display management apparatus in another process described in examples of this application. The processor 2101 may communicate with another network entity by using the transceiver 2103, for example, perform signal transmission with a network device. The memory 2102 is configured to store program code and data of the antenna-under-display management apparatus.

In a second possible implementation, the processor 2101 includes a logic circuit and an input interface and/or an output interface. For example, the output interface is configured to perform a sending action in a corresponding method, and the input interface is configured to perform a receiving action in the corresponding method. In this case, the processor 2101 is configured to control and manage an action of the antenna-under-display management apparatus. For example, the processor 2101 is configured to perform steps in FIG. 4, FIG. 16, and FIG. 17, and/or an action performed by the antenna-under-display management apparatus in another process described in examples of this application. The processor 2101 may communicate with another network entity by using an input interface and/or an output interface, for example, perform signal transmission with a network device. The memory 2102 is configured to store program code and data of the antenna-under-display management apparatus.

In an implementation process, the steps in the method provided in example may be completed by using a hardware integrated logic circuit in the processor, or by using instructions in a form of software. The steps of the methods disclosed with reference to examples of this application may be directly performed by a hardware processor, or may be performed by using a combination of hardware in the processor and a software module. It may be considered that the processor includes the foregoing sensor, or the processor integrates a function of the foregoing sensor.

An example of this application further provides a computer-readable storage medium, including computer-executable instructions. When the instructions are run on a computer, the computer is enabled to perform any one of the foregoing methods.

An example of this application further provides a computer program product, including computer-executable instructions. When the instructions are run on a computer, the computer is enabled to perform any one of the foregoing methods.

An example of this application further provides a communication system, including the foregoing antenna-under-display management apparatus (for example, a terminal). Optionally, the communication system further includes a network device or another terminal.

An example of this application further provides an antenna-under-display management apparatus, including a processor and an interface. The processor is coupled to a memory through the interface. When the processor executes a computer program or computer-executable instructions in the memory, any method provided in the foregoing examples is performed.

All or some of the foregoing examples may be implemented by using software, hardware, firmware, or any combination thereof. When a software program is used to implement examples, all or some of examples may be implemented in a form of a computer program product. The computer program product includes one or more computer instructions. When the computer program instructions are loaded and executed on a computer, all or some of the procedures or functions in examples of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Although this application is described with reference to examples, in a process of implementing this application that claims protection, a person skilled in the art may understand and implement another variation of the disclosed examples by viewing the accompanying drawings, disclosed content, and the appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

## Claims

1. An antenna-under-display management method, comprising:
obtaining antenna-under-display blocking information of a device;
determining a first antenna set based on the antenna-under-display blocking information, wherein the first antenna set is a subset of a second antenna set, and the second antenna set is constituted by an unblocked antenna-under-display of the device; and
performing signal transmission by using the first antenna set,
wherein the obtaining antenna-under-display blocking information of a device comprises:
obtaining screen blocking information of the device, and determining the antenna-under-display blocking information based on the screen blocking information,
wherein the obtaining screen blocking information of the device, and determining the antenna-under-display blocking information based on the screen blocking information comprises:
determining a blocked region on a screen of the device; and
the an antenna-under-display is an antenna-under-display array, and when a ratio of a quantity of antenna elements in the blocked region on the screen of the device to a quantity of antenna elements in an antenna array to which the antenna elements in the blocked region on the screen of the device belongs is greater than a first threshold, determining that the antenna-under-display in the blocked region on the screen of the device is a blocked antenna-under-display.

2. The method according to claim 1, wherein the determining a blocked region on a screen of the device comprises:
determining the blocked region based on a touched region on the screen of the device.

3. The method according to claim 1, wherein the determining a blocked region on a screen of the device comprises:
obtaining capacitance change information of a region on the screen of the device; and
determining the blocked region based on a region in which capacitance changes.

4. The method according to claim 1, wherein the determining a blocked region on a screen of the device comprises:
performing blocking detection on the screen of the device by using one or more sensors, to obtain a detection result; and
determining the blocked region based on the detection result.

5. An antenna-under-display management method, comprising:
obtaining antenna-under-display blocking information of a device;
determining a first antenna set based on the antenna-under-display blocking information, wherein the first antenna set is a subset of a second antenna set, and the second antenna set is constituted by an unblocked antenna-under-display of the device; and
performing signal transmission by using the first antenna set,
wherein a screen of the device comprises a plurality of first regions, there is a correspondence between a first region and an antenna-under-display, and the obtaining antenna-under-display blocking information of a device comprises:
when a blocked proportion of a first region corresponding to a first antenna-under-display is greater than a second threshold, determining that the first antenna-under-display is blocked; and
when the blocked proportion of the first region corresponding to the first antenna-under-display is less than or equal to the second threshold, determining that the first antenna-under-display is not blocked, wherein
the first antenna-under-display is one of the antennas-under-display of the device.

6. The method according to claim 1, wherein the determining a blocked region on a screen of the device comprises:
determining the blocked region on the screen of the device based on a position of an obstacle, in a first space, that blocks the screen of the device, wherein projection of a bottom surface of the first space on a horizontal plane is a screen surface of the device, and a height is a preset value.

7. The method according to claim 1, wherein the determining a blocked region on a screen of the device comprises:
performing blocking detection on a first space by using one or more sensors, wherein projection of a bottom surface of the first space on a horizontal plane is a screen surface of the device, and a height is a preset value; and
determining the blocked region based on a region formed by projecting a position of an obstacle that blocks the screen of the device and that is in the first space onto the screen of the device.

8. An antenna-under-display management method, comprising:
obtaining antenna-under-display blocking information of a device;
determining a first antenna set based on the antenna-under-display blocking information, wherein the first antenna set is a subset of a second antenna set, and the second antenna set is constituted by an unblocked antenna-under-display of the device; and
performing signal transmission by using the first antenna set,
wherein a first space comprises M * N subspaces, M is an integer greater than 1, N is an integer greater than 0, projection of a bottom surface of the first space on a horizontal plane is a screen surface of the device, a height is a preset value, the bottom surface of the first space comprises M second regions, there is a correspondence between a second region and an antenna-under-display, a space that uses the second region as a bottom surface and whose height is the preset value comprises N subspaces, and the obtaining antenna-under-display blocking information of a device comprises:
when a ratio of an area formed by projecting an obstacle that blocks a screen of the device and that is in a first subspace onto the screen to an area of a second region corresponding to a first antenna-under-display is greater than a third threshold, determining that the first antenna-under-display is blocked; and
when the ratio of the area formed by projecting the obstacle that blocks the screen of the device and that is in the first subspace onto the screen to the area of the second region corresponding to the first antenna-under-display is less than or equal to the third threshold, determining that the first antenna-under-display is not blocked, wherein
the first subspace is a subspace, closest to the screen of the device among subspaces occupied by the obstacle, in the N subspaces corresponding to the second region corresponding to the first antenna-under-display, the first antenna-under-display is one of the antennas-under-display of the device, and the third threshold corresponds to the first subspace.

9. The method according to any one of claims 6 to 8, wherein the preset value relates to one or more of the following: a size of the device, a size of the screen of the device, a transmit power of a communication module of the device, a receive power of the communication module of the device, a communication service type carried by a signal, a frequency for touching the screen for performing a service by the device in a communication process, and a detection capability of the device for the antenna-under-display blocking information.

10. The method according to any one of claims 1 to 9, wherein the method further comprises:
periodically detecting the antenna-under-display blocking information of the device; and
updating the second antenna set based on the detected antenna-under-display blocking information of the device.

11. The method according to any one of claims 1 to 10, wherein after the determining a first antenna set based on the antenna-under-display blocking information, the method further comprises:
determining whether link quality of a communication link of the device meets a requirement; and
if the link quality does not meet the requirement, updating the first antenna set.

12. An antenna-under-display management apparatus (200) configured to perform the method according to any one of claims 1 to 11.

13. A computer-readable storage medium, comprising computer-executable instructions, wherein when the computer-executable instructions are run on a computer, the computer is enabled to perform the method according to any one of claims 1 to 11.

14. The method according to any one of claims 1 to 4, wherein the first threshold is 0.5.

## Patentansprüche

1. Verfahren zur Verwaltung einer Antenne-unter-Anzeige, das Folgendes umfasst:
Erhalten von Antenne-unter-Anzeige-Blockierungsinformationen einer Vorrichtung;
Bestimmen einer ersten Antennenmenge basierend auf den Antenne-unter-Anzeige-Blockierungsinformationen, wobei die erste Antennenmenge eine Teilmenge einer zweiten Antennenmenge ist und die zweite Antennenmenge durch eine nicht blockierte Antenne-unter-Anzeige der Vorrichtung gebildet wird; und
Durchführen einer Signalübertragung unter Verwendung der ersten Antennenmenge,
wobei das Erhalten von Antenne-unter-Anzeige-Blockierungsinformationen einer Vorrichtung Folgendes umfasst:
Erhalten von Bildschirmblockierinformationen der Vorrichtung und Bestimmen der Antenne-unter-Anzeige-Blockierinformationen basierend auf den Bildschirmblockierinformationen,
wobei das Erhalten von Bildschirmblockierinformationen der Vorrichtung und Bestimmen der Antenne-unter-Anzeige-Blockierinformationen basierend auf den Bildschirmblockierinformationen Folgendes umfasst:
Bestimmen eines blockierten Bereichs auf einem Bildschirm der Vorrichtung; und
die Antenne-unter-Anzeige ein Antenne-unter-Anzeige-Array ist und wenn ein Verhältnis einer Anzahl von Antennenelementen in dem blockierten Bereich auf dem Bildschirm der Vorrichtung zu einer Anzahl von Antennenelementen in einem Antennenarray, zu dem die Antennenelemente in dem blockierten Bereich auf dem Bildschirm der Vorrichtung gehören, größer als ein erster Schwellenwert ist, Bestimmen, dass die Antenne-unter-Anzeige in dem blockierten Bereich auf dem Bildschirm der Vorrichtung eine blockierte Antenne-unter-Anzeige ist.

2. Verfahren nach Anspruch 1, wobei das Bestimmen eines blockierten Bereichs auf einem Bildschirm der Vorrichtung Folgendes umfasst:
Bestimmen des blockierten Bereichs basierend auf einem berührten Bereich auf dem Bildschirm der Vorrichtung.

3. Verfahren nach Anspruch 1, wobei das Bestimmen eines blockierten Bereichs auf einem Bildschirm der Vorrichtung Folgendes umfasst:
Erhalten von Kapazitätsänderungsinformationen eines Bereichs auf dem Bildschirm der Vorrichtung; und
Bestimmen des blockierten Bereichs basierend auf einem Bereich, in dem sich die Kapazität ändert.

4. Verfahren nach Anspruch 1, wobei das Bestimmen eines blockierten Bereichs auf einem Bildschirm der Vorrichtung Folgendes umfasst:
Durchführen einer Blockierungsdetektion auf dem Bildschirm der Vorrichtung unter Verwendung eines oder mehrerer Sensoren, um ein Detektionsergebnis zu erhalten; und
Bestimmen des blockierten Bereichs basierend auf dem Detektionsergebnis.

5. Verfahren zur Verwaltung einer Antenne-unter-Anzeige, das Folgendes umfasst:
Erhalten von Antenne-unter-Anzeige-Blockierungsinformationen einer Vorrichtung;
Bestimmen einer ersten Antennenmenge basierend auf den Antenne-unter-Anzeige-Blockierungsinformationen, wobei die erste Antennenmenge eine Teilmenge einer zweiten Antennenmenge ist und die zweite Antennenmenge durch eine nicht blockierte Antenne-unter-Anzeige der Vorrichtung gebildet wird; und
Durchführen einer Signalübertragung unter Verwendung der ersten Antennenmenge,
wobei ein Bildschirm der Vorrichtung mehrere erste Bereiche umfasst, eine Entsprechung zwischen einem ersten Bereich und einer Antenne-unter-Anzeige vorliegt und das Erhalten von Antenne-unter-Anzeige-Blockierungsinformationen einer Vorrichtung Folgendes umfasst:
wenn ein blockierter Anteil eines ersten Bereichs, der einer ersten Antenne-unter-Anzeige entspricht, größer als ein zweiter Schwellenwert ist, Bestimmen, dass die erste Antenne-unter-Anzeige blockiert ist; und
wenn der blockierte Anteil des ersten Bereichs, der der ersten Antenne-unter-Anzeige entspricht, kleiner oder gleich dem zweiten Schwellenwert ist, Bestimmen, dass die erste Antenne-unter-Anzeige nicht blockiert ist, wobei
die erste Antenne-unter-Anzeige eine der Antennen-unter-Anzeige der Vorrichtung ist.

6. Verfahren nach Anspruch 1, wobei das Bestimmen eines blockierten Bereichs auf einem Bildschirm der Vorrichtung Folgendes umfasst:
Bestimmen des blockierten Bereichs auf dem Bildschirm der Vorrichtung basierend auf einer Position eines Hindernisses in einem ersten Raum, das den Bildschirm der Vorrichtung blockiert, wobei die Projektion einer Bodenfläche des ersten Raums auf einer horizontalen Ebene eine Bildschirmoberfläche der Vorrichtung ist und eine Höhe ein voreingestellter Wert ist.

7. Verfahren nach Anspruch 1, wobei das Bestimmen eines blockierten Bereichs auf einem Bildschirm der Vorrichtung Folgendes umfasst:
Durchführen einer Blockierungsdetektion an einem ersten Raum unter Verwendung eines oder mehrerer Sensoren, wobei die Projektion einer Bodenfläche des ersten Raums auf eine horizontale Ebene eine Bildschirmoberfläche der Vorrichtung ist und eine Höhe ein voreingestellter Wert ist; und
Bestimmen des blockierten Bereichs basierend auf einem Bereich, der durch Projizieren einer Position eines Hindernisses, das den Bildschirm der Vorrichtung blockiert und das sich in dem ersten Raum befindet, auf den Bildschirm der Vorrichtung gebildet wird.

8. Verfahren zur Verwaltung einer Antenne-unter-Anzeige, das Folgendes umfasst:
Erhalten von Antenne-unter-Anzeige-Blockierungsinformationen einer Vorrichtung;
Bestimmen einer ersten Antennenmenge basierend auf den Antenne-unter-Anzeige-Blockierungsinformationen, wobei die erste Antennenmenge eine Teilmenge einer zweiten Antennenmenge ist und die zweite Antennenmenge durch eine nicht blockierte Antenne-unter-Anzeige der Vorrichtung gebildet wird; und
Durchführen einer Signalübertragung unter Verwendung der ersten Antennenmenge,
wobei ein erster Raum M * N Unterräume umfasst, M eine ganze Zahl größer als 1 ist, N eine ganze Zahl größer als 0 ist, eine Projektion einer Bodenfläche des ersten Raums auf eine horizontale Ebene eine Bildschirmoberfläche der Vorrichtung ist, eine Höhe ein voreingestellter Wert ist, die Bodenfläche des ersten Raums M zweite Bereiche umfasst, eine Entsprechung zwischen einem zweiten Bereich und einer Antenne-unter-Anzeige vorliegt, ein Raum, der den zweiten Bereich als Bodenfläche verwendet und dessen Höhe der voreingestellte Wert ist, N Teilräume umfasst und das Erhalten von Antenne-unter-Anzeige-Blockierungsinformationen einer Vorrichtung Folgendes umfasst:
wenn ein Verhältnis einer Fläche, die durch Projizieren eines Hindernisses, das einen Bildschirm der Vorrichtung blockiert und das sich in einem ersten Teilraum befindet, auf den Bildschirm gebildet wird, zu einer Fläche eines zweiten Bereichs, der einer ersten Antenne-unter-Anzeige entspricht, größer als ein dritter Schwellenwert ist, Bestimmen, dass die erste Antenne-unter-Anzeige blockiert ist; und
wenn das Verhältnis der Fläche, die durch Projizieren des Hindernisses, das den Bildschirm der Vorrichtung blockiert und das sich in dem ersten Teilraum befindet, auf den Bildschirm gebildet wird, zu der Fläche des zweiten Bereichs, der der ersten Antenne-unter-Anzeige entspricht, kleiner oder gleich dem dritten Schwellenwert ist, Bestimmen, dass die erste Antenne-unter-Anzeige nicht blockiert ist, wobei
es sich bei dem ersten Teilraum um einen Teilraum, der dem Bildschirm der Vorrichtung unter durch das Hindernis eingenommenen Teilräumen am nächsten ist, in den N Teilräumen handelt, die dem zweiten Bereich entsprechen, der der ersten Antenne-unter-Anzeige entspricht, die erste Antenne-unter-Anzeige eine der Antennen-unter-Anzeige der Vorrichtung ist und der dritte Schwellenwert dem ersten Teilraum entspricht.

9. Verfahren nach einem der Ansprüche 6 bis 8, wobei sich der voreingestellte Wert auf eines oder mehrere der Folgenden bezieht: eine Größe der Vorrichtung, eine Größe des Bildschirms der Vorrichtung, eine Sendeleistung eines Kommunikationsmoduls der Vorrichtung, eine Empfangsleistung des Kommunikationsmoduls der Vorrichtung, einen Kommunikationsdiensttyp, der von einem Signal geführt wird, eine Häufigkeit des Berührens des Bildschirms zum Durchführen eines Dienstes durch die Vorrichtung in einem Kommunikationsprozess und eine Detektionsfähigkeit der Vorrichtung für die Antenne-unter-Anzeige-Blockierungsinformationen.

10. Verfahren nach einem der Ansprüche 1 bis 9, wobei das Verfahren ferner Folgendes umfasst:
periodisches Detektieren der Antenne-unter-Anzeige-Blockierungsinformationen der Vorrichtung; und
Aktualisieren der zweiten Antennenmenge basierend auf den detektierten Antenne-unter-Anzeige-Blockierungsinformationen der Vorrichtung.

11. Verfahren nach einem der Ansprüche 1 bis 10, wobei das Verfahren nach dem Bestimmen einer ersten Antennenmenge basierend auf den Antenne-unter-Anzeige-Blockierungsinformationen ferner Folgendes umfasst:
Bestimmen, ob die Verbindungsqualität einer Kommunikationsverbindung der Vorrichtung eine Anforderung erfüllt; und
wenn die Verbindungsqualität die Anforderung nicht erfüllt, Aktualisieren der ersten Antennenmenge.

12. Einrichtung (200) zur Verwaltung einer Antenne-unter-Anzeige, die dazu ausgelegt ist, das Verfahren nach einem der Ansprüche 1 bis 11 durchzuführen.

13. Computerlesbares Speichermedium, das computerausführbare Anweisungen umfasst, wobei eine Ausführung der computerausführbaren Anweisungen auf einem Computer ermöglicht, dass der Computer das Verfahren nach einem der Ansprüche 1 bis 11 durchführt.

14. Verfahren nach einem der Ansprüche 1 bis 4, wobei der erste Schwellenwert 0,5 beträgt.

## Revendications

1. Procédé de gestion d'antenne sous écran, le procédé comprenant les étapes suivantes :
obtenir des informations de blocage d'antenne sous écran d'un dispositif ;
déterminer un premier ensemble d'antennes sur la base des informations de blocage d'antenne sous écran, le premier ensemble d'antennes étant un sous-ensemble d'un deuxième ensemble d'antennes, et le deuxième ensemble d'antennes étant constitué par les antennes sous écran non bloquées du dispositif ; et
réaliser une transmission de signal en utilisant le premier ensemble d'antennes,
dans lequel l'obtention des informations de blocage d'antenne sous écran d'un dispositif comprend :
l'obtention d'informations de blocage d'écran du dispositif, et la détermination des informations de blocage d'antenne sous écran sur la base des informations de blocage d'écran,
dans lequel l'obtention des informations de blocage d'écran du dispositif, et la détermination des informations de blocage d'antenne sous écran sur la base des informations de blocage d'écran comprennent les étapes suivantes :
déterminer une région bloquée sur un écran du dispositif ; et
l'antenne sous écran est un réseau d'antenne sous écran et, lorsqu'un rapport entre la quantité d'éléments d'antenne dans la région bloquée sur l'écran du dispositif et la quantité d'éléments d'antenne dans un réseau d'antenne auquel appartiennent les éléments d'antenne dans la région bloquée sur l'écran du dispositif est supérieur à un premier seuil, déterminer que l'antenne sous écran dans la région bloquée sur l'écran du dispositif est une antenne sous écran bloquée.

2. Procédé selon la revendication 1, dans lequel la détermination d'une région bloquée sur un écran du dispositif comprend l'étape suivante :
déterminer la région bloquée sur la base d'une région touchée sur l'écran du dispositif.

3. Procédé selon la revendication 1, dans lequel la détermination d'une région bloquée sur un écran du dispositif comprend l'étape suivante :
obtenir des informations de changement de capacité d'une région sur l'écran du dispositif ; et
déterminer la région bloquée sur la base d'une région dans laquelle la capacité change.

4. Procédé selon la revendication 1, dans lequel la détermination d'une région bloquée sur un écran du dispositif comprend l'étape suivante :
effectuer une détection de blocage sur l'écran du dispositif en utilisant un ou plusieurs capteurs, pour obtenir un résultat de détection ; et
déterminer la région bloquée sur la base du résultat de la détection.

5. Procédé de gestion d'antenne sous écran, le procédé comprenant les étapes suivantes :
obtenir des informations de blocage d'antenne sous écran d'un dispositif ;
déterminer un premier ensemble d'antennes sur la base des informations de blocage d'antenne sous écran, le premier ensemble d'antennes étant un sous-ensemble d'un deuxième ensemble d'antennes, et le deuxième ensemble d'antennes étant constitué par les antennes sous écran non bloquées du dispositif ; et
réaliser une transmission de signal en utilisant le premier ensemble d'antennes,
dans lequel un écran du dispositif comprend une pluralité de premières régions, il y a une correspondance entre une première région et une antenne sous écran, et l'obtention d'informations de blocage d'antenne sous écran d'un dispositif comprend les étapes suivantes :
lorsqu'une proportion bloquée d'une première région correspondant à une première antenne sous écran est supérieure à un deuxième seuil, déterminer que la première antenne sous écran est bloquée ; et
lorsque la proportion bloquée de la première région correspondant à la première antenne sous écran est inférieure ou égale au deuxième seuil, déterminer que la première antenne sous écran n'est pas bloquée, dans lequel
la première antenne sous écran est l'une des antennes sous écran du dispositif.

6. Procédé selon la revendication 1, dans lequel la détermination d'une région bloquée sur un écran du dispositif comprend l'étape suivante :
déterminer la région bloquée sur l'écran du dispositif sur la base d'une position d'un obstacle, dans un premier espace, qui bloque l'écran du dispositif, dans lequel la projection d'une surface inférieure du premier espace sur un plan horizontal est une surface d'écran du dispositif, et une hauteur est une valeur prédéterminée.

7. Procédé selon la revendication 1, dans lequel la détermination d'une région bloquée sur un écran du dispositif comprend l'étape suivante :
réaliser une détection de blocage sur un premier espace à l'aide d'un ou de plusieurs capteurs, la projection d'une surface inférieure du premier espace sur un plan horizontal étant une surface d'écran du dispositif, et une hauteur étant une valeur prédéterminée ; et
déterminer la région bloquée sur la base d'une région formée par projection d'une position d'un obstacle qui bloque l'écran du dispositif et qui se trouve dans le premier espace sur l'écran du dispositif.

8. Procédé de gestion d'antenne sous écran, le procédé comprenant les étapes suivantes :
obtenir des informations de blocage d'antenne sous écran d'un dispositif ;
déterminer un premier ensemble d'antennes sur la base des informations de blocage d'antenne sous écran, le premier ensemble d'antennes étant un sous-ensemble d'un deuxième ensemble d'antennes, et le deuxième ensemble d'antennes étant constitué par les antennes sous écran non bloquées du dispositif ; et
réaliser une transmission de signal en utilisant le premier ensemble d'antennes,
dans lequel un premier espace comprend M * N sous-espaces, M est un entier supérieur à 1, N est un entier supérieur à 0, une projection d'une surface inférieure du premier espace sur un plan horizontal est une surface d'écran du dispositif, une hauteur est une valeur prédéterminée, la surface inférieure du premier espace comprend M deuxièmes régions, il y a une correspondance entre une deuxième région et une antenne sous écran, un espace qui utilise la deuxième région comme surface inférieure et dont la hauteur est la valeur prédéterminée comprend N sous-espaces, et l'obtention d'une information de blocage d'antenne sous écran d'un dispositif comprend les étapes suivantes :
lorsqu'un rapport d'une surface formée par la projection d'un obstacle bloquant un écran du dispositif et se trouvant dans un premier sous-espace sur l'écran sur une surface d'une deuxième région correspondant à une première antenne sous écran est supérieur à un troisième seuil, déterminer que la première antenne sous écran est bloquée ; et
lorsque le rapport entre la surface formée par la projection de l'obstacle qui obstrue l'écran du dispositif et qui se trouve dans le premier sous-espace sur l'écran et la surface de la deuxième région correspondant à la première antenne sous écran est inférieur ou égal au troisième seuil, déterminer que la première antenne sous écran n'est pas bloquée, dans lequel
le premier sous-espace est un sous-espace, le plus proche de l'écran du dispositif parmi les sous-espaces occupés par l'obstacle, dans les N sous-espaces correspondant à la deuxième région correspondant à la première antenne sous écran, la première antenne sous écran étant l'une des antennes sous écran du dispositif, et le troisième seuil correspondant au premier sous-espace.

9. Procédé selon l'une quelconque des revendications 6 à 8, dans lequel la valeur prédéterminée concerne un ou plusieurs des éléments suivants : une taille du dispositif, une taille de l'écran du dispositif, une puissance d'émission d'un module de communication du dispositif, une puissance de réception du module de communication du dispositif, un type de service de communication porté par un signal, une fréquence pour toucher l'écran pour effectuer un service par le dispositif dans un processus de communication, et une capacité de détection du dispositif pour les informations de blocage d'antenne sous écran.

10. Procédé selon l'une quelconque des revendications 1 à 9, le procédé comprenant en outre les étapes suivantes :
détecter périodiquement les informations de blocage d'antenne sous écran du dispositif ; et
mettre à jour le deuxième ensemble d'antennes sur la base des informations de blocage d'antenne sous écran détectées du dispositif.

11. Procédé selon l'une quelconque des revendications 1 à 10, dans lequel, après la détermination d'un premier ensemble d'antennes sur la base des informations de blocage d'antenne sous écran, le procédé comprend en outre les étapes suivantes :
déterminer si la qualité de liaison d'une liaison de communication du dispositif répond à une exigence ; et
si la qualité de liaison ne répond pas aux exigences, mettre à jour le premier ensemble d'antennes.

12. Appareil de gestion d'antenne sous écran (200) configuré pour réaliser le procédé selon l'une quelconque des revendications 1 à 11.

13. Support de stockage lisible par ordinateur, comprenant des instructions exécutables par ordinateur, dans lequel, lorsque les instructions exécutables par ordinateur sont exécutées sur un ordinateur, l'ordinateur peut exécuter le procédé selon l'une quelconque des revendications 1 à 11.

14. Procédé selon l'une quelconque des revendications 1 à 4, dans lequel le premier seuil est 0,5.
